# EUROPEAN PATENT SPECIFICATION

(11) **EP 3 669 514 B1**
(45) Date of publication and mention of the grant of the patent: **10.05.2023**
(21) Application number: 18768945.0
(22) Date of filing: 14.08.2018
(51) Int. Cl.: H04L 67/1095, H04L 9/40, G06Q 20/24, G06Q 30/06, G06Q 30/0645, H04L 9/32, H04L 9/00, G06F 21/64, H04L 41/5006

(54) **TENANT MANAGEMENT METHOD AND SYSTEM IN A CLOUD COMPUTING ENVIRONMENT**
VERFAHREN UND SYSTEM ZUR TENANT-VERWALTUNG IN EINER CLOUD-COMPUTING-UMGEBUNG
PROCÉDÉ ET SYSTÈME DE GESTION DE LOCATAIRE DANS UN ENVIRONNEMENT INFORMATIQUE EN NUAGE

(30) Priority: 16.08.2017 US 201762546225 P; 19.12.2017 US 201715846911
(43) Date of publication of application: 24.06.2020
(73) Proprietor: Telefonaktiebolaget LM Ericsson (PUBL), 164 83 Stockholm (SE)
(72) Inventor: KEMPF, James, Mountain View CA 94041 (US); HALÉN, Joacim, SE-191 40 Sollentuna (SE); MECKLIN, Tomas, 02400 Kyrkslätt (FI)
(74) Representative: Ericsson
(86) International application number: PCT/IB2018/056099
(87) International publication number: WO 2019/034989

(56) References cited:
- US-A1- 2017 213 209
- US-B1- 9 608 809
- Jean-Philippe Martin ET AL: "Minimal Byzantine Storage" In: "Medical image computing and computer-assisted intervention - MICCAI 2015 : 18th international conference, Munich, Germany, October 5-9, 2015; proceedings", 1 January 2002 (2002-01-01), Springer International Publishing, Cham 032548, XP055513454, ISSN: 0302-9743 ISBN: 978-3-030-00888-8 vol. 2508, pages 311-325, DOI: 10.1007/3-540-36108-1_21, the whole document

## Description

### PRIORITY

This nonprovisional application claims priority based upon the following prior United States provisional patent application(s): (i) "APPARATUS AND METHOD FOR MANAGING TENANT ACCOUNTING POLICY AND RECORDS IN A CLOUD EXECUTION ENVIRONMENT," Application No.: 62/546,225, filed August 16, 2017, in the name(s) of James Kempf, Joacim Halen and Tomas Mecklin.

### TECHNICAL FIELD

The present disclosure generally relates to data center management. More particularly, and not by way of any limitation, the present disclosure is directed to a system and method for managing one or more tenants in a cloud computing environment comprising one or more data centers.

### BACKGROUND

Most cloud computing tenant, user and/or subscriber (hereinafter "tenant") management systems use a centralized account management system in which one or a replicated collection of nodes contain records in an SQL tenant database where a single node acts as the primary node. An example is the OpenStack Keystone tenant identity management system. In some cases, the tenant management system only handles identity management. In other, mostly proprietary, solutions, the tenant management system also handles charging. The replication procedure between nodes is usually handled by a single node acting as the primary and/or designated (hereinafter "primary") controller, which takes transactions and propagates them to other nodes.

If the primary controller experiences an anomaly, such as a crash, before propagating transactions to the replicated nodes, transactions can be lost or corrupted. Corruption introduced in the tenant database can propagate to the replicas. Further, if the capacity of the primary controller to handle traffic is limited it can become overwhelmed, also causing corruption to data.

A primary controller is typically scaled by replicating it in a cluster. This limits the number of clients a single controller node must handle. If tenant charges are processed by more than one controller, the database used for recording charging transactions must be reconciled. This is an additional time consuming step that is introduced into tenant charge reporting due to wide area network latency.

### SUMMARY

The present patent disclosure is broadly directed to systems, methods, apparatuses, devices, and associated non-transitory computer-readable media and network architecture for effectuating a tenant management system and method operative in a cloud-based database environment. In one aspect, an embodiment of the present invention comprises an apparatus and a method to manage cloud computing tenant account policy using contracts involving a blockchain ledger (hereinafter "smart contracts"). Smart contracts are written on a distributed system comprising a blockchain database, a state machine where the contracts are executed, and a consensus protocol to ensure all nodes agree on the ordering and content of transactions. In one embodiment, a consensus protocol such as RAFT may be used for purposes of achieving consensus among a plurality of nodes configured to effectuate tenant policy management decisions.

In a further aspect, a tenant management system (TMS) and associated method operative in a cloud-based database environment is disclosed. A distributed blockchain ledger is provided for holding tenant records embodied in smart contracts, the consistency of which is maintained by a consensus protocol between multiple chain servers processing requests from leaf servers for tenant authorization and charging. The tenant records contain the bytecode for the tenant management contracts, the tenant's credit, and other state associated with the contract such as the services the tenant is authorized to access.

In a further aspect, an embodiment of a system or apparatus for managing a cloud-based data center operative to support a plurality of tenants is disclosed. The claimed embodiment comprises, *inter alia,* a plurality of leaf servers each configured to execute a tenant policy enforcement module (TPEM) operative to facilitate enrollment of one or more tenants for resources and services supported by the data center and to control a tenant's access to at least one of the resources and services upon authentication and authorization. A plurality of chain servers are coupled to the TPEM nodes, wherein a chain server may be configured to execute a tenant policy decision/management module (TPDM, for short) in association with a smart contract execution module, wherein the TPDM service logic executing on a chain server is operative responsive to a request from a leaf server for access on behalf of a tenant to one or more resources or services supported by the data center. A plurality of persistent storage devices are coupled to the plurality of chain servers, wherein each persistent storage device is coupled to a corresponding chain server and configured to store tenant records comprising tenant management contract and transaction information in a blockchain replica. In one arrangement, the claimed apparatus may include a communications network interconnecting the plurality of leaf servers, the plurality of chain servers and at least a subset of the plurality of the persistent storage devices for effectuating communications therebetween. In a further arrangement, the TPEM/TPDM service logic may be co-located, in a single node or a set of nodes, of a tenant management architecture associated with the cloud-based data center.

In a still further aspect, an embodiment of a method of managing a cloud-based data center operative to support a plurality of tenants is disclosed. The claimed method comprises, *inter alia,* enrolling one or more tenants for obtaining resources and services supported by the data center and implementing one or more smart contracts by a TPDM executing on a plurality of chain servers for each of the tenants responsive to the enrolling of the tenants. The claimed method further involves compiling the one or more smart contracts into bytecode data and organizing tenant records in a blockchain replica associated with a corresponding chain server, wherein the tenant records each contain the compiled bytecode generated from the one or more smart contracts created with respect to a tenant's service management agreement, a plurality of state variables describing a current state of the tenant's account, and one or more data fields operative to support blockchain management and navigation within the blockchain replica. In one implementation, the claimed method also involves maintaining coherency among the blockchain replicas by executing a consensus protocol engine on at least a portion of the plurality of chain servers. In a still further implementation, the claimed method also involves storing each blockchain replica in a persistent storage device associated with the corresponding chain server, and causally disconnecting each persistent storage device from other persistent storage devices with respect to a malfunction on any of the other persistent storage devices.

In a still further aspect, an embodiment of the invention comprises: (i) a blockchain ledger for holding tenant records, the consistency of which is maintained by a distributed consensus protocol between multiple chain servers processing requests from leaf servers for tenant authorization and charging, wherein the tenant records contain the bytecode for the tenant management contracts, the tenant's credit, and other state associated with the contracts such as the services the tenant is authorized to access; (ii) a tenant policy decision mechanism consisting of executable code in smart contracts, written in a simplified smart contract language such as Solidity and executed in program language virtual machines designed for executing the smart contract language, located on the chain servers; and (iii) a policy enforcement mechanism consisting of software agents on leaf servers that query the chain servers when tenants want access to resources such as basic connectivity to the data center, as when logging in, compute time or cycles for executing processes, megabytes of storage and/or network bandwidth. The results from the chain servers determine whether the tenant request is granted or denied. The policy enforcement can additionally be used for higher level services, such as charging for watching streaming video, etc.

In a still further aspect, an embodiment of the present invention is a cloud tenant management system having hardware and software components, comprising a tenant policy decision module resident on any subset or all of a plurality of chain servers for implementing smart contracts; the one or a plurality of chain servers each generating an entry in a blockchain ledger for holding tenant records embodied by smart contracts; and one or a plurality of leaf servers having thereon a policy enforcement module.

In a still further aspect, an embodiment of the present invention comprises a non-transitory machine-readable storage medium that provides instructions that, if executed by a processor, will cause a processor to perform operations comprising implementing smart contracts by a tenant policy decision module or agent resident on any or all of a plurality of chain servers; generating, by one of the plurality of chain servers, an entry in a blockchain ledger for holding tenant records embodied by smart contracts; and enforcing policy defined by the smart contracts by one or a plurality of leaf servers having thereon a policy enforcement module. The non-transitory machine-readable storage medium that provides instructions to be executed by a processor maintains consistency by a distributed consensus protocol between multiple chain servers that are operative to process requests from the one or plurality of leaf servers. The non-transitory machine-readable storage medium that provides instructions to be executed by a processor stores tenant records containing the bytecode for tenant management contracts, tenant credit, and other state associated with the contracts such as the services the tenant is authorized to access.

In a further variation, an embodiment of the non-transitory machine-readable storage medium that provides instructions to be executed by a processor includes a tenant policy decision agent/module that executes code in smart contracts written in a simplified smart contract language stored in an associated chain server. The non-transitory machine-readable storage medium that provides instructions to be executed by a processor stores and executes a policy enforcement agent/module on a leaf server operable to query any one or all of the chain servers when a tenant requests access to resources, such resources including connectivity to a data center, compute time or cycles for executing processes, megabytes of storage and/or network bandwidth. The non-transitory machine-readable storage medium that provides instructions to be executed by a processor can be implemented in any of a network device (ND), a network element (NE), as a network function, as a virtual NE, virtual ND, virtual appliance or virtual machine.

In still further aspects, an embodiment of a system, apparatus, or network element is disclosed which comprises, *inter alia,* suitable hardware such as processors and persistent memory having program instructions for executing an embodiment of the methods set forth herein.

In still further aspects, one or more embodiments of a non-transitory computer-readable medium or distributed media containing computer-executable program instructions or code portions stored thereon are disclosed for performing one or more embodiments of the methods of the present invention when executed by a processor entity of a network node, apparatus, system, network element, subscriber device, and the like, *mutatis mutandis.* Further features of the various embodiments are as claimed in the dependent claims.

Advantageously, having a tenant database maintained as a distributed system and managed by a blockchain-based TMS as set forth in the present patent application ensures that the crashing of one chain server will not cause the database to become corrupt or invalid. If the storage of a chain server becomes corrupt, it can be renewed by copying the storage of one of the other chain servers. Further benefits of the present invention include greater degree of scalability, wherein individual chain server nodes can be added to the blockchain by simply booting them up with the chain server/TPDM modules on them. Not only will this allow the TMS architecture to autoscale, it can additionally scale to a distributed cloud by simply bringing up one or a collection of chain servers in each data center, and having them communicate with each other over the wide area network. Furthermore, having the tenant management policies embodied in smart contracts provides a high degree of flexibility beyond current systems since a customized contract can easily be made to match the particular requirements of a tenant, wherein new services can be added to the tenant authorization and charging system by simply adding additional functions to the contract libraries.

Additional benefits and advantages of the embodiments will be apparent in view of the following description and accompanying Figures.

### BRIEF DESCRIPTION OF THE DRAWINGS

Embodiments of the present disclosure are illustrated by way of example, and not by way of limitation, in the Figures of the accompanying drawings in which like references indicate similar elements. It should be noted that different references to "an" or "one" embodiment in this disclosure are not necessarily to the same embodiment, and such references may mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.

The accompanying drawings are incorporated into and form a part of the specification to illustrate one or more exemplary embodiments of the present disclosure. Various advantages and features of the disclosure will be understood from the following Detailed Description taken in connection with the appended claims and with reference to the attached drawing Figures in which:
FIG. 1 depicts a generalized example cloud-based data center network environment wherein an embodiment of the present invention may be practiced for managing one or more tenants hosted a distributed cloud-based data center;
FIG. 2 depicts a block diagram of an example tenant management system according to an embodiment of the present invention;
FIG. 3 depicts a block diagram of a functional model with respect to various functionalities that may be effectuated in implementing an example tenant management system at a cloud-based data center according to an embodiment;
FIG. 4 is a flowchart illustrative of various blocks, steps and/or acts of a tenant enrollment method that may be (re)combined in one or more arrangements, with or without blocks, steps and/or acts of additional flowcharts of the present disclosure, for effectuating an example tenant management system at a cloud-based data center according to an embodiment;
FIG. 5 depicts an example tenant record in an implementation of a tenant management system of the present invention;
FIG. 6 depicts a representation of an example blockchain replica that may be configured to hold tenants' data, transactions and contract information in an embodiment of the present invention;
FIG. 7 is a flowchart illustrative of various blocks, steps and/or acts of an example tenant management method that may be (re)combined in one or more arrangements, with or without blocks, steps and/or acts of additional flowcharts of the present disclosure, according to one or more embodiments of the present invention;
FIG. 8 depicts an example message flow diagram with respect to service/resource authorization at a data center according an embodiment of the present invention;
FIG. 9 depicts a block diagram of a computer-implemented apparatus that may be (re)configured and/or (re)arranged as a platform, node or element to effectuate one or more nodes, network devices, or servers of a tenant management system according to an embodiment of the present invention;
FIGS. 10A/10B illustrate connectivity between network devices (NDs) within an exemplary data center network, as well as three exemplary implementations of the NDs, according to some embodiments of the present invention; and
FIG. 11 depicts an example distributed data center network environment having multiple cloud-based data centers that may be managed according to an embodiment of the present invention.

### DETAILED DESCRIPTION

In the description herein for embodiments of the present invention, numerous specific details are provided, such as examples of components and/or methods, to provide a thorough understanding of embodiments of the present invention. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention. Accordingly, it will be appreciated by one skilled in the art that the embodiments of the present disclosure may be practiced without such specific components. It should be further recognized that those of ordinary skill in the art, with the aid of the Detailed Description set forth herein and taking reference to the accompanying drawings, will be able to make and use one or more embodiments without undue experimentation.

Additionally, terms such as "coupled" and "connected," along with their derivatives, may be used in the following description, claims, or both. It should be understood that these terms are not necessarily intended as synonyms for each other. "Coupled" may be used to indicate that two or more elements, which may or may not be in direct physical or electrical contact with each other, co-operate or interact with each other. "Connected" may be used to indicate the establishment of communication, i.e., a communicative relationship, between two or more elements that are coupled with each other. Further, in one or more example embodiments set forth herein, generally speaking, an element, component or module may be configured to perform a function if the element may be programmed for performing or otherwise structurally arranged to perform that function.

As used herein, a network element (e.g., a router, switch, bridge, etc.) is a piece of networking equipment, including hardware and software that communicatively interconnects other equipment on a network (e.g., other network elements, end stations, etc.). Some network elements may comprise "multiple services network elements" that provide support for multiple networking functions (e.g., routing, bridging, switching, Layer-2 aggregation, session border control, Quality of Service, and/or subscriber management, and the like), and/or provide support for multiple application services (e.g., data, voice, and video). Subscriber/tenant end stations (e.g., servers, workstations, laptops, netbooks, palm tops, mobile phones, smartphones, multimedia phones, Voice Over Internet Protocol (VoIP) phones, user equipment, terminals, portable media players, GPS units, gaming systems, set-top boxes) may access or consume resources/services, including cloud-centric resources/services, provided over a packet-switched wide area public network such as the Internet via suitable service provider access networks, wherein one or more data centers hosting such resources and services on behalf of a plurality of tenants may be managed according to some embodiments set forth hereinbelow. Subscriber/tenant end stations may also access or consume resources/services provided on virtual private networks (VPNs) overlaid on (e.g., tunneled through) the Internet. Typically, subscriber/tenant end stations may be coupled (e.g., through customer/tenant premise equipment or CPE/TPE coupled to an access network (wired or wirelessly)) to edge network elements, which are coupled (e.g., through one or more core network elements) to other edge network elements, and to cloud-based data center elements with respect to consuming hosted resources/services according to service management agreements, contracts, etc.

One or more embodiments of the present patent disclosure may be implemented using different combinations of software, firmware, and/or hardware. Thus, one or more of the techniques shown in the Figures (e.g., flowcharts) may be implemented using code and data stored and executed on one or more electronic devices or nodes (e.g., a subscriber client device or end station, a network element, etc.). Such electronic devices may store and communicate (internally and/or with other electronic devices over a network) code and data using computer-readable media, such as non-transitory computer-readable storage media (e.g., magnetic disks, optical disks, random access memory, read-only memory, flash memory devices, phase-change memory, etc.), transitory computer-readable transmission media (e.g., electrical, optical, acoustical or other form of propagated signals - such as carrier waves, infrared signals, digital signals), etc. In addition, such network elements may typically include a set of one or more processors coupled to one or more other components, such as one or more storage devices (e.g., non-transitory machine-readable storage media) as well as storage database(s), user input/output devices (e.g., a keyboard, a touch screen, a pointing device, and/or a display), and network connections for effectuating signaling and/or bearer media transmission. The coupling of the set of processors and other components may be typically through one or more buses and bridges (also termed as bus controllers), arranged in any known (e.g., symmetric/shared multiprocessing) or heretofore unknown architectures. Thus, the storage device or component of a given electronic device or network element may be configured to store code and/or data for execution on one or more processors of that element, node or electronic device for purposes of implementing one or more techniques of the present disclosure.

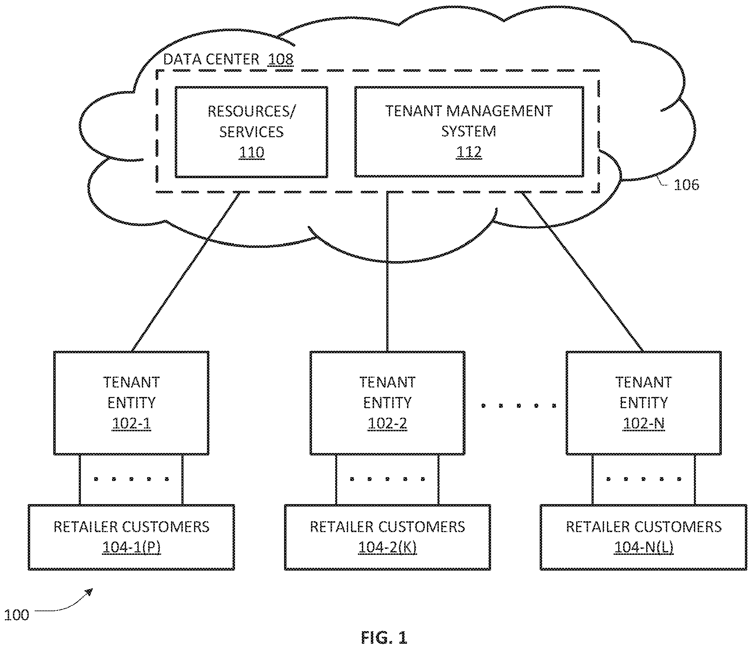

Referring now to the drawings and more particularly to FIG. 1, depicted therein is a generalized example cloud-based data center network environment 100 wherein an embodiment of the present invention may be practiced for managing one or more tenants hosted by a data center. Skilled artisans will recognize that the example cloud-based data center network environment 100 may comprise one or more data centers 108 disposed in an cloud operator network 106 that may be configured to offer a variety of resources and services to multiple tenants (i.e., multi-tenancy) pursuant to suitable service level agreements, service management contracts, and so on. A tenant, for purposes of the present disclosure, may be understood as a person, organization, business, entity, or a group of users, that has enrolled with the cloud operator or provider for requesting and/or consuming a specific suite of resources/services under particularized authentication/authorization credentials, privileges, constraints, policy-based business rules, and the like. By way of illustration, a plurality of tenant entities 102-1 to 102-N exemplified in FIG. 1 may comprise corporate, commercial or governmental organizations, each serving respective retail customers or consumers 104-1(P) to 104-N(L), that may request and consume one or more resources/services 110 hosted by the cloud-based data center 108 via one or more tenant premises equipment, end stations or computing devices, disposed in tethered (wired) or untethered (wireless) network environments. As such, example tenant entities 102-1 to 102-N may span across various types of businesses and industries, and may consume one or more resources/services including, without limitation, cloud storage resources, processor compute resources, network bandwidth resources, load balancing services, virtualized network infrastructure resources, Software as a Service (SaaS) services, Platform as a Service (PaaS) services, Infrastructure as a Service (laaS) services, streaming media services, voice telephony/VoIP services, and one or more inline services such as, e.g., Deep Packet Inspection (DPI) services, Virus Scanning (VS) services, Intrusion Detection and Prevention (IDP) services, Firewall (FW) filtering services and Network Address Translation (NAT) services, and the like.

Broadly, with a multitenant architecture, the data center 108 may be arranged to provide every tenant a dedicated or configurable share of a resource/service including its data, configuration, user management, tenant individual functionality as well as properties such as security, charging, etc. At a macro level, the data center 108 may be implemented in a hierarchically interconnected system of multiple nodes including appropriate compute, storage and network elements disposed in a wide area backbone (e.g., IP or Next Generation Network (NGN)), to which a tenant premises equipment or subscriber end station may have secure Internet access. In one embodiment, a tenant premise can have its own compute resources logically separated from the cloud-based data center resources/services 110. In another arrangement, a tenant's private cloud may be accessed remotely via suitable Secure Sockets Layer (SSL) or IPSec VPN connections. Regardless of a particular multitenant architecture, example data center 108 may be organized based on a multi-layer hierarchical network model which may in general include three layers of hierarchy: a core layer (typically characterized by a high degree of redundancy and bandwidth capacity, optimized for high availability and performance), an aggregation layer that may be characterized by a high degree of high-bandwidth port density capacity (optimized for traffic distribution and link fan-out capabilities to access layer switches, and an access layer serving to connect host/server nodes to the network infrastructure. In one embodiment, example nodes in an aggregation layer may be configured to serve functionally as a boundary layer between OSI Layers 2 and 3 (i.e., an L2/L3 boundary) while the access layer elements may be configured to serve at L2 level (e.g., LANs or VLANs).

From the perspective of a functional model, example data center 108 may be comprised of the following layers: (i) network layer, (ii) services layer, (iii) compute layer, (iv) storage layer, and (v) management layer. Skilled artisans will recognize that with respect to the services layer there can be a difference between a conventional data center services layer and the cloud-based data center services layer in that the functional reference model of the cloud-based data center services layer may be architected for supporting application of L4-L7 services at a per-tenant level, e.g., through logical abstraction of the physical resources including hardware and software resources. Even with L4-L7 integrated services being provided, a cloud-based data center services layer may be configured to implement centralized services which may be more useful in applying policies that are broadly applicable across a range of tenants (or across different workgroups within a tenant premises network). An example management layer of the data center 108 may be architected as set of logical, functional and structural resources required to support and manage the overall multitenant architecture, including domain element management systems as well as higher level service orchestration systems, preferably configured to executing various data center administration functions regarding storage, compute, and network resources, including elements which allow for more dynamic resource allocation and automated processes (i.e., instantiating administrative or tenant user portals, service catalogs, workflow automation, tenant lifecycle management, scripting smart contracts, and the like). In one arrangement, a tenant management system (TMS) 112 may therefore be implemented as a "superset" or "backend" functionality of the cloud-based data center 108 in connection with the hosted resources/services 110 configured to serve the plurality of tenants 102-1 to 102-N for purposes of an example embodiment of the present invention as will be set forth in further detail hereinbelow.

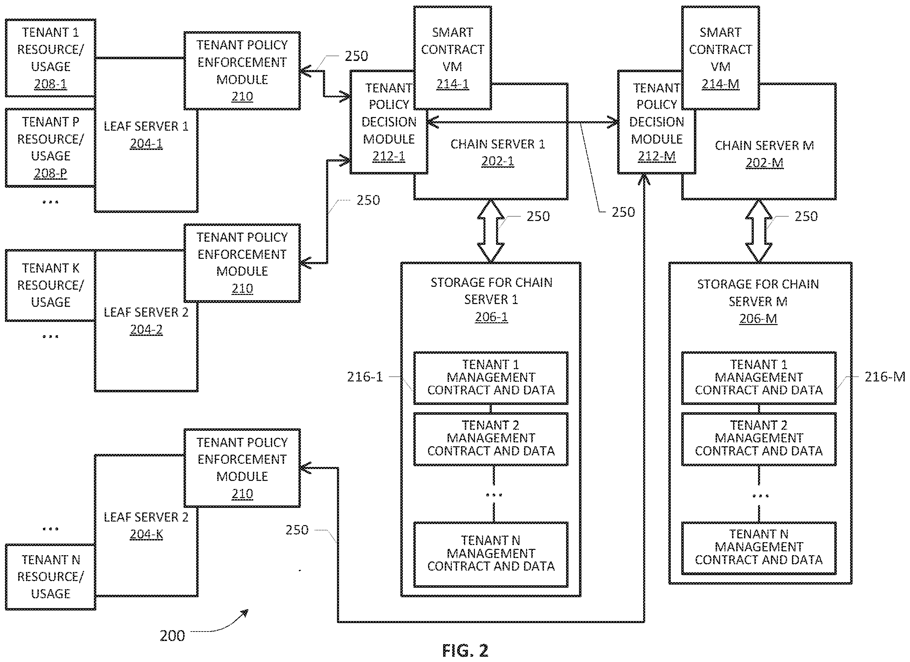

FIG. 2 depicts a block diagram of an example management system 200 that represents a tenant services management (TSM) architecture operative in association with or as part of a data center, e.g., as at least a portion of TMS 112, according to an embodiment of the present invention. Skilled artisans will recognize upon reference hereto that one or more nodes, elements, functionalities, modules and/or blocks of the example management system 200 may be implemented or realized in conjunction with one or more network devices (NDs), network elements (NEs), virtual managers (VMs), virtual network elements or functions (VNE/VNFs) in a network function virtualization (NFV) architecture (with or without a software defined network (SDN)), using a variety of architectural and/or hierarchical network reference models. Accordingly, the teachings herein will be set forth in a description that is generally agnostic as to an actual hardware/software implementation, and should be appreciated as being applicable in a variety of network configurations, *mutatis mutandis.*

Broadly, an embodiment of the management system 200 involves replacing a cluster of conventional databases (such as, e.g., Structured Query Language (SQL) databases) that are typically used for tenant records management with a distributed blockchain ledger operating in conjunction with smart contracts for executing transactions on the ledger, which may be implemented as a distributed permission-based structure. The blockchain ledger may be maintained by a collection of servers (hereinafter "chain servers") coupled to persistent storage where the state and copies of the blockchain (e.g., blockchain replicas) may be stored. In one implementation, a suitable consensus protocol (e.g., RAFT) may be executed between the chain servers in order to ensure consistency of transactions. A plurality of smart contracts associated with the tenants may be executed in conjunction with a state machine or engine (e.g., such as the Ethereum VM used by Solidity, a smart contract programming language that is part of the Ethereum system) running on one or more chain servers, in association with suitable blockchain navigation logic as will be set forth below. In one arrangement, each chain server may be configured to run a copy of the state machine with respect to the smart contracts that embody respective tenant management policies and service level agreements. In one arrangement, the execution of smart contracts at a chain server in response to queries about resource usage renders the chain server a policy management/decision point. Further, policy enforcement agents or modules executing at one or more leaf nodes or servers provide access to tenants with respect to various resources/services (e.g., compute, storage, networking, and the like) in a query-based mechanism with the chain servers to determine a tenant's credit availability and obtain authorization for the tenant to utilize resources/services. The leaf servers may accordingly be disposed in a cloud-based TMS architecture as access as well as policy enforcement nodes, where access to resources is either granted or denied based on the decisions made in accordance with the smart contracts. If any question arises with respect to a particular tenant, the transactions may be replayed to determine what exactly happened by launching a diagnostics/logging session.

Continuing to refer to FIG. 2, an example embodiment of the TMS architecture 200 (which may also be referred to as a tenant account policy/record management system) may therefore comprise a plurality of hardware components, software components, firmware components and interconnection components, in a network fabric to facilitate a blockchain-based tenant management methodology based on smart contracts. Illustratively, a plurality of chain servers 202-1 to 202-M are exemplified, each configured to execute a tenant policy decision/management (TPDM) module that is operative to provide authoritative decisions about tenant identity/authentication, service authorization, and charging. A plurality of persistent storage devices 206-1 to 206-M, either directly connected to the respective chain servers 202-1 to 202-M, or at least a portion of which may be available over a backbone network, are configured to store tenant records comprising tenant management contracts, transactions data, bytecode data generated/compiled from the smart contracts, state variables associated with respective state machines/engines, etc., in a blockchain replica (which may be collectively referred to as blockchain data). In one embodiment, the storage devices 206-1 to 206-M are causally disconnected from each other with respect to malfunctions/failures of various types such that if one crashes the others will not be affected immediately (e.g., at least for a preconfigured time window). One or more leaf servers 204-1 to 204-K are operative to execute a tenant policy enforcement module (TPEM) configured to provide access to and facilitate controlled consumption of compute resources, network resources, storage resources, etc., with respect to one or more tenants served thereby. As will be set forth in further detail below, the leaf servers 204-1 to 204-K may also provide access to enrollment, identity/authentication, service authorization, and higher level services (e.g., streaming video, voice telephony, etc.) through the tenant management architecture 200. As an example leaf server node, server 204-1 is operative to execute a tenant policy enforcement module or agent 210 for serving a plurality of tenants whose resources/usage is logically maintained separately as blocks 208-1 through 208-P. A network fabric, represented as interconnected paths 250, may be provided for connecting the chain servers 202-1 to 202-M, at least a subset of the storage devices 206-1 to 206-M (e.g., those that are not local to the chain servers) as well as the leaf servers 204-1 to 204-K. In one arrangement, the network fabric 250 can be an internal data center fabric (if the nodes, devices, and other components are all disposed within the same data center) that can provide low average latencies, e.g., less than 20 milliseconds (ms) or so. In another arrangement, the network fabric 250 may comprise a wide area network with higher latencies (but less than 100 ms or so, for example), connecting data centers having internal fabrics that connect the devices within a particular data center.

Components, modules or blocks associated with the various servers set forth above may be executed on dedicated platforms or using resources that are virtualized in an architecture embodying one or more hypervisors or virtual machine monitors (VMMs) comprising computer software, firmware and hardware that creates and runs virtual machines optimized for specific functionalities. Regardless of how such components may be realized in a particular implementation, the structural/functional aspects of the chain servers including one or more TPDMs running thereon and the structural/functional aspects of the leaf servers including one or more TPEMs running thereon may be integrated or distributed in a number of ways, depending on the tenant density, scalability, form factor constraints (e.g., rack/blade server architectures), etc. For example, where the number of tenants is not large or the amount of storage required by a blockchain ledger is not an issue, the leaf nodes and chain nodes can be integrated or co-located in a single node. A chain server may also be configured to convert to a leaf server in one arrangement where, upon boot up, it discovers that the blockchain database has been corrupted. It can then restore the blockchain database while taking user requests and sending them to another chain server. When the database has been restored, it can convert back into a chain server. In a still further arrangement, to keep the storage used by the blockchain small, an example blockchain ledger can be periodically trimmed, removing older records and/or blocks.

Accordingly, in one example embodiment, each chain server of the plurality of chain servers 202-1 to 202-M may be configured with a corresponding tenant policy decision module, e.g., TPDM modules 212-1 to 212-M, at least a portion of which may be configured to execute a suitable consensus protocol engine, e.g., RAFT, with respect to the transactions carried out by the TMS architecture 200. Example TPDM modules 212-1 to 212-M may also be configured to initiate, control and/or manage inter-server communications among the chain servers 202-1 to 202-M via the fabric 250. Further, example TPDM modules 212-1 to 212-M may also be configured to handle and respond to requests from one or more leaf servers 204-1 to 204-K with respect to tenants' access to resources and services, and coordinate the execution of the smart contracts in conjunction with a smart contract virtual machine (VM) 214-1 through 214-M associated with respective chain servers. One skilled in the art will recognize that a smart contract VM in the context of the present patent application does not refer to an Operating System (OS) image executed along with other images on a server. Rather, a smart contract VM may be embodied as a system process that executes bytecodes generated from a language used for creating/coding a program, specifically, a smart contract program. In general, bytecode is programming code that, once compiled, may be executed on virtual machine instead of a computer processor platform. Using this approach, source code of a smart contract can be run on any platform once it has been compiled and run through the VM. For purposes of the present patent application, a smart contract may be a specific computer protocol generated from a tenant's service agreement or clauses therein that can be rendered partially or fully self-executing, self-enforcing, or both, wherein the protocol is operative to facilitate, verify, or enforce the negotiation and/or performance of a clause. It should be appreciated that a tenant management system based on smart contracts as set forth herein is not only operable to provide security that is superior to traditional contract law management, but it can also advantageously reduce transaction costs of enforcement.

In one example embodiment, a smart contract can be implemented in Solidity, a contract-oriented, high-level language whose syntax is similar to that of JavaScript, which is designed to interoperate with the Ethereum Virtual Machine (EVM) technology. Solidity is statically typed, and may be configured to support inheritance, libraries and complex user-defined types, among other features. A smart contract as implemented by Solidity may therefore be embodied in one arrangement as a collection of code (its functions) and data (its state) that resides at a specific address on an Ethereum-based blockchain. A smart contract virtual machine or engine 214-1 through 214-M operating under the control of the respective chain server's TPDM 202-1 to 202-M may accordingly be configured to execute the smart contract bytecode for each tenant's management contract(s) in association with the state machine implementation for executing smart contracts provided thereon.

As noted above, each leaf server node 204-1 to 204-K is operative to execute a tenant policy enforcement module (e.g., TPEM 210), which coordinates and processes access requests to resources and services on behalf of each of the tenants served by the leaf server. Further, TPEM 210 may also be configured to execute and facilitate tenant life cycle management functionalities, e.g., enrollment, removal, service look-up, etc., in association with the TPDM entities 202-1 to 202-M of the system 200, as will be set forth in additional detail further below.

Persistent data structures 216-1 through 216-M may each be provided as a replica of the blockchain in respective storage devices 206-1 through 206-M for holding the tenant records in a distributed digital ledger. Although a blockchain structure is exemplified herein for implementing the tenant record distributed ledger (e.g., as a consensus-based replicated, shared and synchronized digital data, and secured using cryptography), other implementations of a distributed ledger (e.g., based on directed acyclic graphs) may also be used in an additional or alternative embodiment of the present invention. Generally, each record may be configured, at a low level, to include the compiled bytecode for a smart contract for each tenant as well as each tenant's state variables describing the current state of such tenant's account. In addition, the following values may be included in an example record to support blockchain navigation and the TPDM functionality of the TPM architecture 200: (a) a timestamp, giving the last time the record was modified; and (b) the hash value of the previous block in the chain, which acts as a pointer to the rest of the chain.

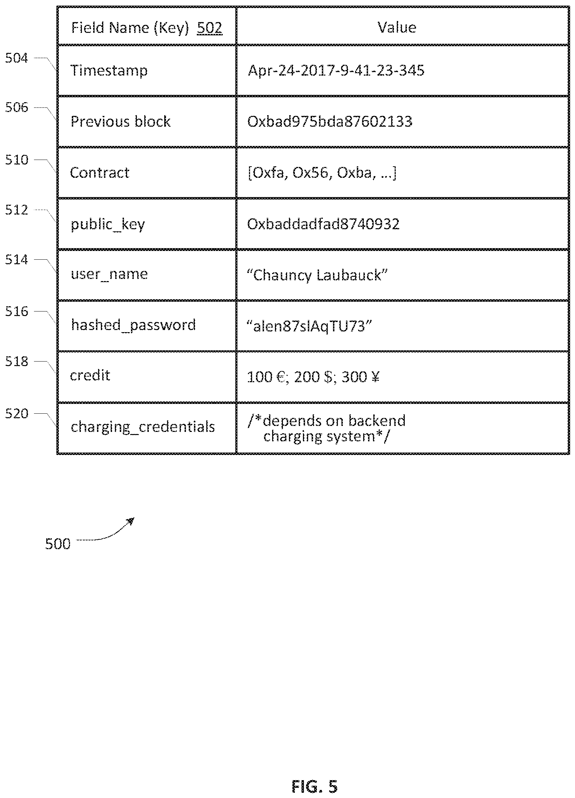

Taking reference to FIG. 5, depicted therein is an example tenant record 500 in an implementation of a tenant management system of the present invention, including at least a portion of tenant specific information by way of illustration. As shown in this example tenant record 500, a plurality of fields 502 may be provided that may operate as key values, with each field having specific value, data, information or other indicia. A sample of the key-values, such as, e.g., key-value fields 504, 506, referring to timestamp and hash of previous block, respectively, are not part of the contract. Rather, such fields may be used by the TPDM logic to manage the blockchain in one embodiment. Likewise, a Contract field 510 may be provided to indicate the address/location, identifier, or other key indicium of a tenant's contract. A public_key 512, user_name 514 and hashed_password 516 may be provided or obtained at tenant enrollment and may comprise at least a portion of the tenant specific ID/authentication credential information. A credit field 518 is operative to indicate the credit amount a tenant has in suitable denomination(s), e.g., 100 Euros. A charging_credentials field 520 is operative to indicate how a tenant's service/resource consumption may be charged. One skilled in the art will clearly recognize that the foregoing is merely an illustrative example of a tenant record and may be implemented in a number of ways, including in more complex arrangements having various additional pieces of data.

In an example embodiment involving Solidity-based smart contracts implementation, a single Solidity contract object may be provided in a block of a blockchain along with other objects that may have been recorded into the blockchain, at least some of which may or may not belong to the same tenant. From the tenant and service perspective, however, a tenant's contract may comprise a number of Solidity contract objects whose mapping to the actual storage may be varied (and dependent upon) how a blockchain structure is organized. For instance, they could all be bundled into a small number of blocks (including, as an extreme example, a single block), or they could be spread across multiple blocks. At the level of a Solidity contract, the logic just sees the addresses of the contract objects in one implementation. Accordingly, in such an implementation, it is not critical as to how the contract objects are stored or partitioned among the blocks. By way of a further arrangement, each block of a blockchain may be configured to contain a single transaction where a blockchain validator may be configured to as a transaction processor. A transaction may have any number of items or objects in it; not just a single tenant record, wherein a transaction may be recorded or recognized each time something is written into the blockchain. Accordingly, it should be appreciated that there can be a number of ways to partition transitions among the blocks, depending on how a particular blockchain structure is implemented by a data center operator.

Regardless of a specific blockchain implementation, an example embodiment of the present invention may involve a permission-based or private blockchain arrangement, where only verified and authorized data center nodes or agents are allowed to access the modify the blockchain (i.e., a private chain). As such, the term "blockchain" may be applied within the context of an example embodiment of the present patent application to a data structure that batches data into time-stamped blocks and prohibits two or more transactions from concurrently modifying an object in the database. Irrespective of whether permissionless or permissioned structures are used, a blockchain may be implemented as a continuously expanding list of records, called blocks, which are linked and secured using cryptography. Each block typically contains a hash pointer as a link to a previous block, a timestamp and transaction data. In this manner, blockchains resist modification of its underlying data. Functionally, a blockchain is a distributed ledger (private or open) that can record transactions between two parties efficiently and in a verifiable and permanent way. A distributed ledger, or blockchain, of an embodiment of the present invention may be managed by a peer-to-peer network involving blockchain logic modules executing on the chain servers, which may be configured to use the same protocol to validate new blocks. Once recorded, the data in any given block cannot be altered retroactively without the alteration of all subsequent blocks. As can be seen, this would require significant collusion, which makes a blockchain-based tenant records management system as set forth herein inherently secure.

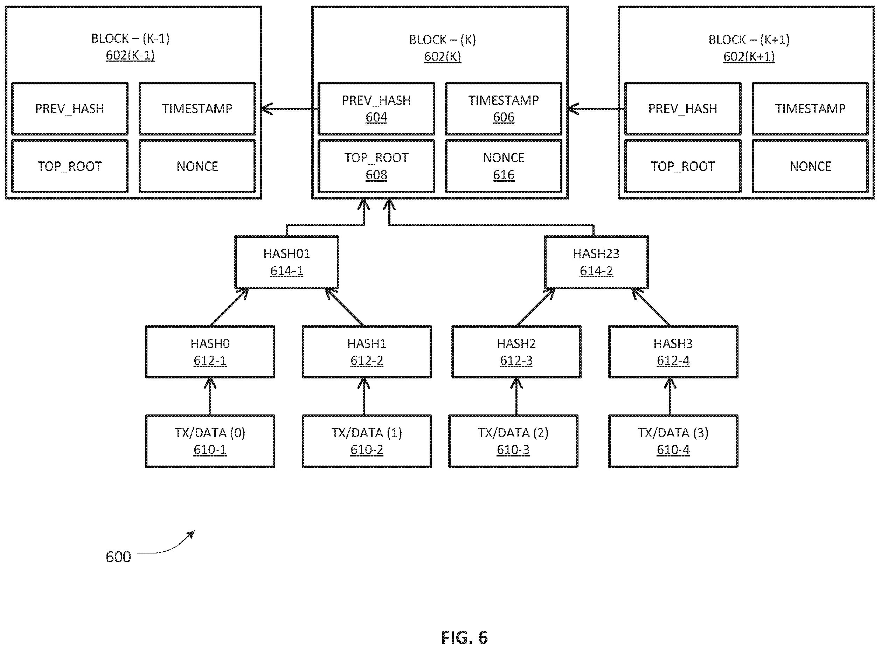

Taking reference to FIG. 6, depicted therein is a portion of an example blockchain replica 600 that may be configured to hold tenants' data, transactions and contract information according to an embodiment of the present invention, wherein each block may be identified by a cryptographically generated hash (e.g., SHA-256 hashing). Three blocks 602(K-1), 602(K), 602(K+1) are illustratively linked in the example portion 600, wherein each contains a Prev_Hash field that is generated from the hashing of the contents of the previous block (including the payload and overhead), which therefore includes a hash pointer that points to the previous block. By way of example, block 602(K) is illustrated to show a Prev_Hash 604 that includes a pointer generated from the previous block, i.e., block 602(K-1). Illustrative block 602(K) is also exemplified with a timestamp 606 as well as a summary of transactions/data objects in a binary hash tree (also referred to as a Merkle tree) having a Top_Root 608 (also referred to as a Merkle root) generated from hierarchical hashing of leaves/fields comprising transactions or data. As illustrated, four transaction/data fields 610-1 to 610-4 are hashed first to give rise to four corresponding hash values 612-1 to 612-4. A first pair of hash values 612-1 and 612-2 are hashed together again to generate a next level hash value of 614-1. Likewise, a second pair of hash values 612-3 and 612-4 are hashed to generate a next level hash value 614-2. The pair of next level hashes 614-1, 614-2 are finally hashed together in order to create the Top_Root hash 608 of the block 602(K). Although a binary symmetric Merkle tree is illustrated in reference to block 602(K), it should be appreciated that some example implementations of a blockchain may also involve asymmetric Merkle hash trees wherein one or more transaction/data fields may be replicated in order to achieve symmetry. Further, some example implementations of a blockchain may also include a nonce field in the block headers, e.g., nonce 606, which is essentially a random or pseudo-random number used in an authentication protocol to ensure that chances of a successful replay attack are mathematically/computationally prohibited.

Based on the foregoing, it should be appreciated that a blockchain-based TMS according to an embodiment of the present invention is inherently secure by design, and may be implemented as a distributed computing system with high Byzantine fault tolerance, while still having decentralized consensus. This set of features makes a TMS blockchain ideally suitable for the recording of events and records pertaining to a large number of tenants, with potentially unlimited scalability. Whereas consensus is a fundamental problem in fault-tolerant distributed systems, consensus involving multiple servers such as TPDM chain servers may be achieved using a number of suitable consensus protocols such as RAFT, as noted previously. RAFT is disclosed in the document "In Search of an Understandable Consensus Algorithm", D. Ongaro and J. Osterhaut, Proceedings of USENIX ATC '14: 2014 USENIX Annual Technical Conference, June 2014, pp. 305-319.

In general, consensus involves multiple servers agreeing on values and once they reach a decision on a value, that decision may be treated as final. Typical consensus algorithms make progress when any majority of the servers of a distributed system is available. For example, a cluster of five servers can continue to operate even if two servers fail. If more servers fail, they may stop making progress but will never return an incorrect result. Skilled artisans will recognize that by applying a consensus protocol among multiple TPDM nodes, a tenant management policy may be rendered directly executable. Although RAFT consensus protocol has been exemplified herein, it should be appreciated that other consensus protocols may be applied in additional or alternative embodiments of TMS architecture according to the teachings of the present patent disclosure. An example TMS architecture embodiment using RAFT may employ a stronger form of leadership than other consensus algorithms, however. For example, log entries may be configured to only flow from the leader to other servers in one arrangement, which may simplify the management of the replicated log and makes RAFT easier to understand. Further, a TMS architecture embodiment using RAFT may employ randomized timers to elect leaders, which may add only a small amount of resources/ overhead to the heartbeats already required for any consensus algorithm, while resolving conflicts simply and rapidly. In a still further arrangement, RAFT's mechanism for changing a set of servers in the cluster may use a joint consensus approach where the majorities of two different configurations overlap during transitions. This may allow the cluster to continue operating normally during configuration changes. Whereas RAFT is one of a number of high performance consensus algorithms exemplified herein, additional/alternative embodiments may involve other consensus protocols as noted previously. One such example consensus protocol is Proof of Elapsed Time (PoET), which is used in the Hyperledger Sawtooth blockchain. Still further example consensus protocols for purposes of an embodiment of the present invention are: Practical Byzantine Fault Tolerance (PBFT), Proof of Work (PoW), Proof of Stake (PoS), Delegated PoS, etc. One skilled in the art will therefore appreciate that the embodiments described herein are not dependent on the details of a particular consensus algorithm so long as the performance is sufficient such that a transaction can complete in approximately less than 50 milliseconds or so.

In the context of the multiple TPDM based chain servers, consensus typically arises in connection with replicated state machines executing thereon, which is a general approach to building a fault-tolerant distributed TMS system. Thus, on one arrangement, each server may be provided with a state machine and a log, wherein it is desired that the state machine component is rendered fault-tolerant, such as a hash table. In one arrangement, therefore, it will appear to clients that they are interacting with a single, reliable state machine, even if a minority of the servers in the cluster fail. Each state machine takes as input commands from its log, whereby a consensus algorithm is executed to agree on the commands in the servers' logs.

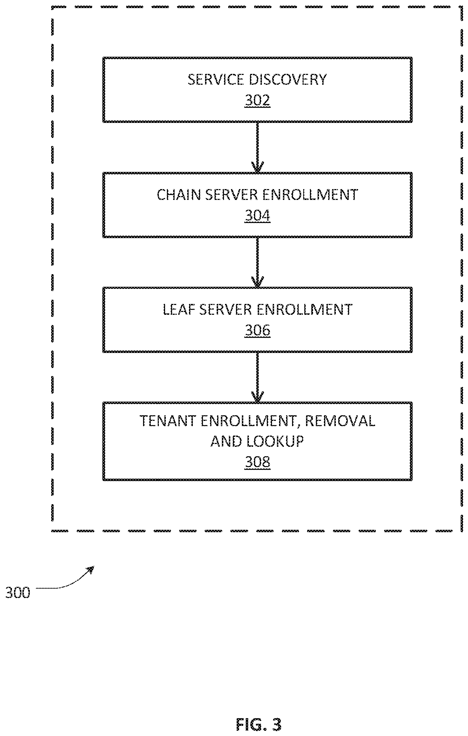

Various sets of steps, acts, or functionalities, as well as associated components, of an embodiment of the foregoing TMS architecture 200 may comprise one or more processes, sub-processes, or sub-systems that may be grouped into a plurality of blocks associated with a tenant service management functional model 300 as exemplified in FIG. 3. Roughly, the service management functional model 300 may comprise a service discovery block or module 302, a chain server enrollment block or module 304, a leaf server enrollment block or module, and a tenant life cycle management block or module 308 relating to tenants' enrollment, removal and look-up for service authorization. In one example implementation, chain servers and leaf servers may be configured to discover each by using a standard service discovery technique such as Domain Name System (DNS) service record (SRV record) or DNS SRV REC (see, e.g., "A DNS RR for specifying the location of services (DNS SRV)", A. Gulbrandsen, P. Vixie, P., and L. Esibov,, RFC 2782, February 2000) or Consul (see, e.g., https://www.consul.io/intro/,). In one arrangement, the servers may be configured to assemble into a network by exchanging known protocol messages. It should be noted that all communication on a blockchain network for implementing an embodiment of the TMS architecture of the present invention may be encrypted. Accordingly, the chain servers and leaf servers may be configured to generate a public/private key pair using a suitable cryptographic algorithm (such as, e.g., elliptic curve (EC) cryptography) for such communication. Further, the servers may be configured with public key certificates containing their public keys and attesting to their providence, and provided by a certificate authority to ensure trust between the blockchain network components. It will be apparent that any suitable certificate authority mechanism having appropriate trust properties can also replace a public key infrastructure for purposes of an embodiment of the present invention.

In a further or alternative arrangement, the chain servers configured to find each other using the DNS SRV REC process may involve a SRV record having the data defining the location, e.g., the hostname and port number, of the servers for specified services, as set forth in RFC 2782. The chain servers managing the same blockchain may all be configured to use an SRV record for type `-TADMIN_BLOCK CS". In a scenario involving load balancing, an example embodiment may use DNS for passive load balancing or an active load balancer. In one arrangement, all chain servers maintaining a tenant ledger may be required to record their DNS names in the _TADMIN_BLOCK_CS SRV record for the data center DNS domain.

In a still further or alternative arrangement, the leaf servers may also similarly use the DNS SRV Rec "_TADMIN_BLOCK" to find a chain server. If DNS load balancing is used, this record may include the names of all chain servers maintaining the block chain, together with priorities and weights. If load balancing is implemented using an active load balancer, this SRV REC may contain the name of a load balancing server, which may be configured to select a chain server upon first contact. In still further or alternative arrangements, an embodiment of the present invention may include one or more mechanisms for HTTP service discovery using suitable tools for discovering and configuring services in an infrastructure, e.g., including Consul, as previously noted.

In a still further or alternative arrangement, additional steps, blocks and components implementing steps relate to chain server enrollment, e.g., as part of block 304 of the service functional model 300 depicted in FIG. 3. For example, when a new chain server boots up, the TPDM block thereon may first search for a _TADMIN_BLOCK_CS SRV record advertising other servers, then update the SRV record with its name and add a record containing its name to address mapping. Thereafter, the following steps may be performed in an example implementation:
(1) generating a public/private key pair for communication between chain servers and with leaf servers using a public key crypto-algorithm such as EC, as noted previously. Elliptic curve cryptography (ECC) is an approach to public-key cryptography based on the algebraic structure of elliptic curves over finite fields. ECC requires smaller keys compared to non-ECC cryptography (based on plain Galois fields) to provide equivalent security. Elliptic curves are applicable for key agreement, digital signatures, pseudo-random generators and other tasks. Indirectly, they can be used for encryption by combining the key agreement with a symmetric encryption scheme. They can also be used in integer factorization algorithms based on elliptic curves that have applications in cryptography, such as Lenstra elliptic curve factorization. Using any or a combination of the foregoing techniques, communication among the chain servers as well as between the chain and leaf servers may be encrypted;
(2) sending a message to each of the other chain servers' TPDMs listed in the DNS SRV record informing them that it has arrived and is ready to participate in consensus;
(3) when responses have been received from all servers in the DNS SRV record, opening the blockchain ledger in its attached storage and performing any caching or other actions necessary to initialize its access to the blockchain;
(4) if the storage is empty or not up to date, requesting a copy from one of the other servers participating in consensus and downloading it. The newly booted chain server determines if its blockchain is up to date by requesting the currently active record from one of the other chain servers and comparing the date to the date on the current record of its copy from storage; and
(5) updating the load balancer (if necessary and/or where implemented) with a message informing the load balancer that the server is up and ready to take transactions, or, if DNS load balancing is being used, update the _TADMIN_BLOCK SRV record Rec with its address, weight and priority, the weight and priority being obtained from a configuration file. The newly booted chain server determines which of these procedures to use based on a configuration file.

In a still further or alternative arrangement, additional steps, blocks and components implementing steps relate to leaf server enrollment, e.g., as part of block 306 depicted in FIG. 3, which are set forth immediately below:
(1) when a leaf server is booted, generating by the TPEM executing thereon, a public/private key pair with a suitable public key crypto-algorithm such as EC or variants thereof. All messages between the TPEM and one or more TPDMs may then be encrypted using the public key;
(2) requesting, by the TPEM, a chain server through a DNS SRV record for the _TADMIN_BLOCK service, with the server either selected from the record if DNS load balancing is used, otherwise through the load balancer;
(3) contacting, by the leaf server, the chain server and requesting the chain server's public key which it uses to encrypt further communication. All communications between the leaf server and chain server, including the initial contact, are accordingly encrypted.

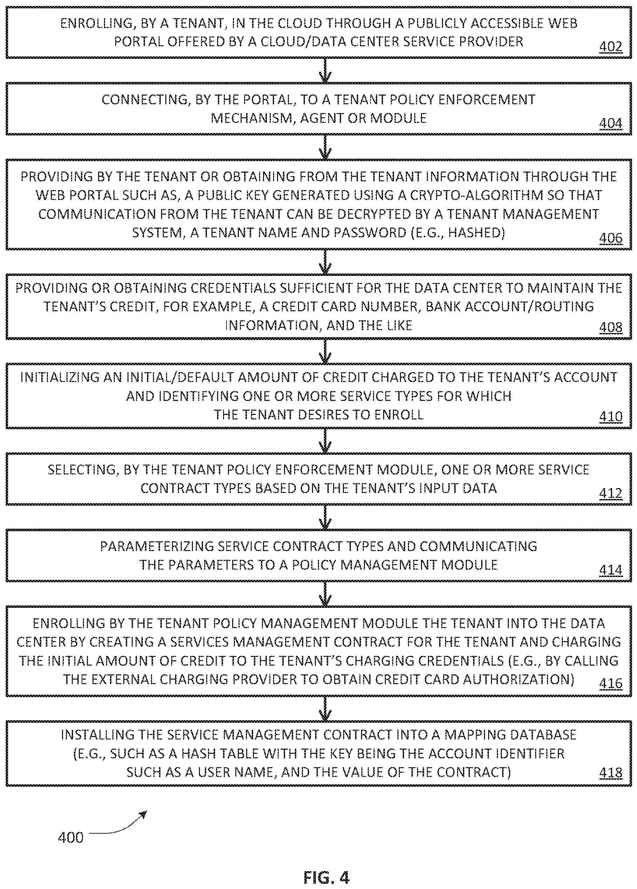

Further steps and acts, and blocks/components required to implement the steps, of an embodiment of the present invention relate to a tenant's life cycle management 308 as noted above. FIG. 4 is a flowchart illustrative of various blocks, steps and/or acts of a tenant enrollment method 400 that may be (re)combined in one or more arrangements, with or without blocks, steps and/or acts of additional flowcharts of the present disclosure, for effectuating an example tenant management system at a cloud-based data center according to an embodiment. Provided below is a set of such steps and/acts in relation to the process 400 of FIG. 4 in an example implementation:
(1) enrolling, by a tenant, in the cloud through a publicly accessible web portal offered by a cloud service provider. The web portal server may be configured as a leaf server operating to run the tenant policy enforcement agent/module (block 402);
(2) connecting, by or via the portal, directly to the tenant policy enforcement agent/module which may be either built into the program and accessible via a graphical user interface, or through inter-process communication (IPI) (block 404);
(3) providing, by the tenant, various pieces of information to the cloud provider through the web portal, *inter alia* (blocks 406-410):
   (a) a public key generated using a crypto-algorithm so that communication from the tenant can be decrypted by the tenant management system;
   (b) a tenant name and password. The password can be obscured using a suitable hashing or encryption algorithm as it is entered to avoid it appearing in clear text. The tenant name can act as the identifier for the tenant account. It should be noted that other means of identification can be used, for example, a public key, requiring a tenant certificate;
   (c) credentials sufficient for the cloud provider to maintain the tenant's credit, for example, a credit card number;
   (d) an initial amount of credit that should be charged to the tenant's account; and
   (e) one or more service types for which the tenant desires to enroll;
(4) selecting, by the tenant policy enforcement agent/module, a service contract type based on the tenant's choice and parameterizing the service contract types; communicating the parameters to the tenant policy decision management agent/module on a chain server via smart contract remote procedure call (RPC) such as a REST call, to the Tenant_Management contract in an enroll() RPC call (block 412 and 414);
(5) enrolling by the tenant policy management/decision module, e.g., via enroll() method, the tenant into the data center by creating a services contract for the tenant and charging the initial amount of credit to the tenant's charging credentials by calling the external charging provider to obtain credit card authorization (block 416);
(6) installing, by the enroll() method, the service management contract into a mapping such as a Solidity hash table with the key being the account identifier such as a user name, and the value of the contract (block 418).

Removal of a tenant from the TMS may be effectuated in a similar manner in accordance with the following steps in an example implementation:
(1) calling by the tenant policy enforcement agent/module the remove() method; and
(2) nulling out the hash mapping for the account identifier, returning the remaining credit to the tenant's external account, and deleting the contract by calling the Service kill() method; thereby effectively removing the tenant from the system. It should be noted that depending on the services for which the tenant is authorized, some cleanup action(s) and/or processes might be required such as deleting the tenant's remaining files on storage.

Lookup of a tenant on the TMS may be effectuated in accordance with the following steps in an example implementation:
(1) fetching, when a tenant logs into the data center, by the tenant policy enforcement agent/module on the server assigned to the tenant, the tenant contract using a lookup() method using the account identifier as the key;
(2) returning, by the method, a contract of type Service, an abstract super type from which all tenant contracts inherit.

With respect to tenant management contracts, a TPDM of the present invention may be configured to select a contract type based on the service type selected by the tenant at the time it enrolls. In one example implementation, each of the options provided by the web portal may correspond to a predefined smart contract type, which the TPDM may create and return to the serving TPEM. Further, the smart contract may be inserted into the blockchain as an encrypted block along with the tenant name, hashed password, and the payment credentials, as noted elsewhere in the present patent application. The block may be encrypted and a suitable consensus protocol engine may then be executed in conjunction with other chain servers to insert the block into the chain. Once consensus is achieved, the contract becomes the basis of the tenant's service agreement pursuant to which the tenant may receive resources and/or services upon authentication and authorization.

Set forth below is an example Solidity pseudocode block in a table illustrating a tenant lifecycle including a contract as well as tenant enrollment/removal processes:

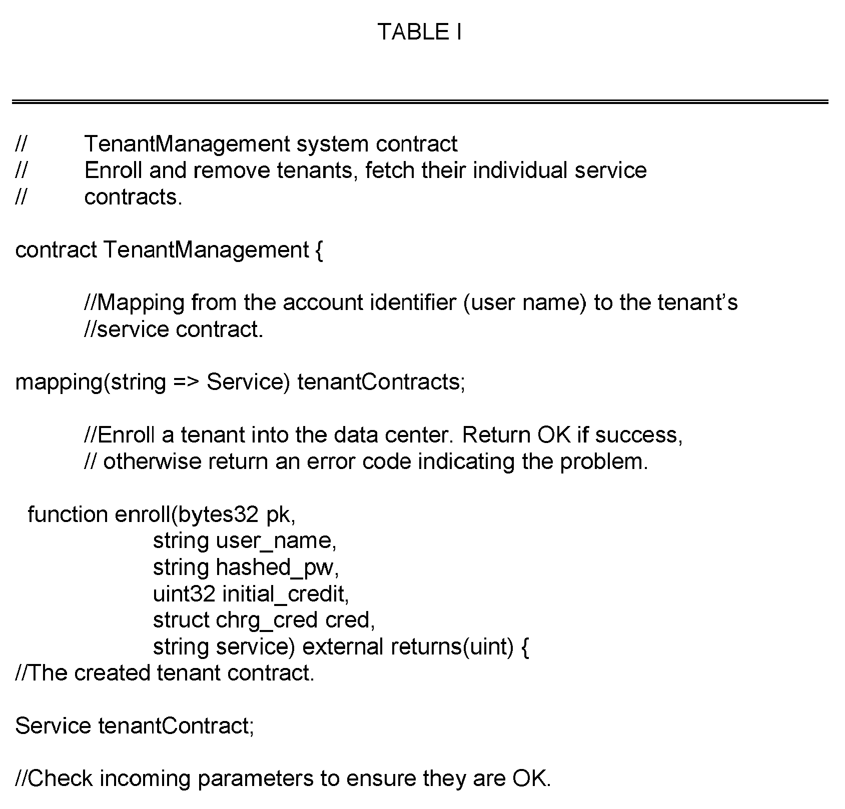

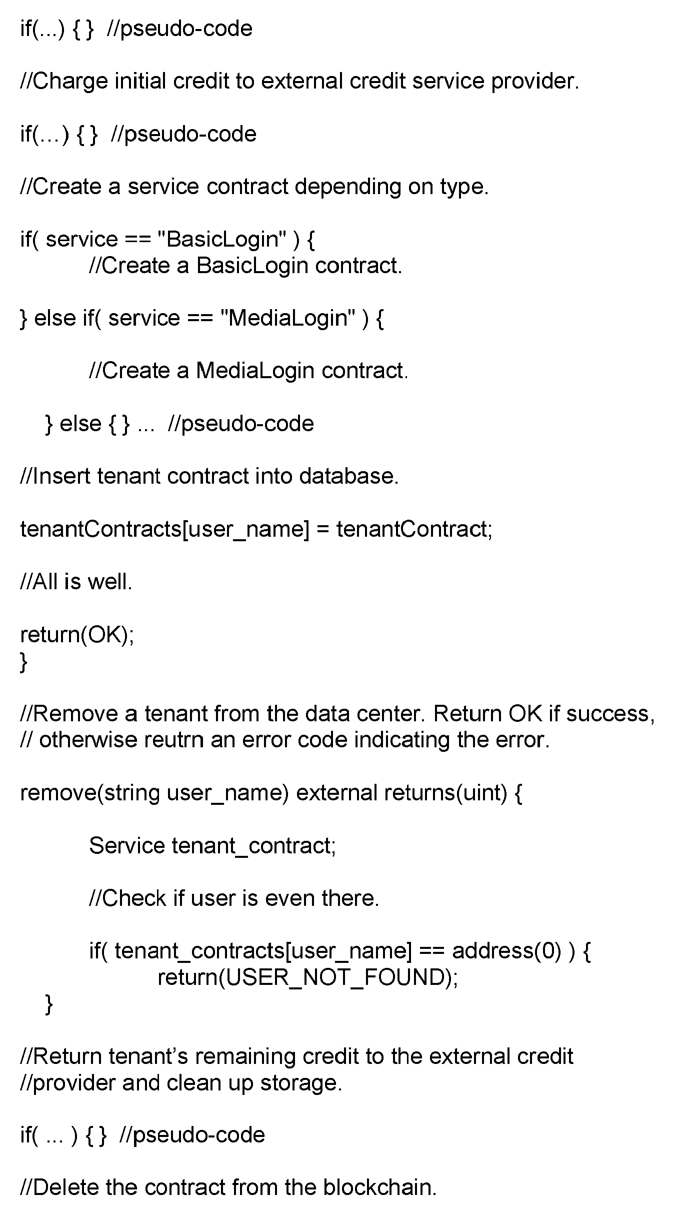

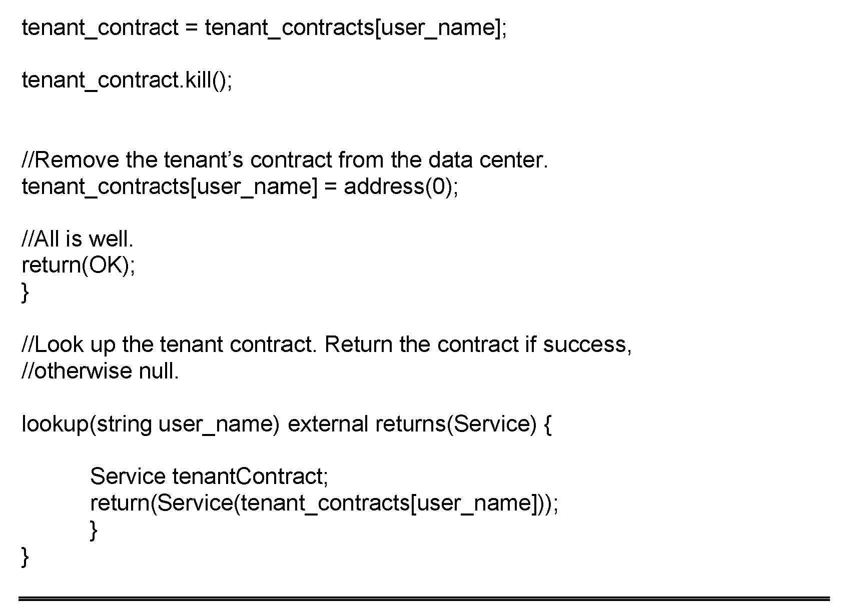

With respect to example contract type interfaces for purposes of the present patent disclosure, a Service contract may be defined as the root type for a tenant management contract, as set forth in an illustrative pseudocode portion set forth below. It should be noted that the below illustrative pseudocode exemplifies contract type interfaces for building specific tenant management contracts. In one arrangement, a Service contract may contain one or more data structures for managing tenant information and for handling type safe casts. The tenant structure type defines a tenant record, and the owner variable contains information on the tenant that owns the contract. Tenant information from the tenant structure may comprise an example tenant record shown in FIG. 5 described above, as are some of the lower case variables shown in the below illustrative pseudocode. Type casts are used to up-level the Service contract to a more specific contract type, where the interface functions: authorize(), revoke(), and charge(), undefined in the basic Service contract, are defined.

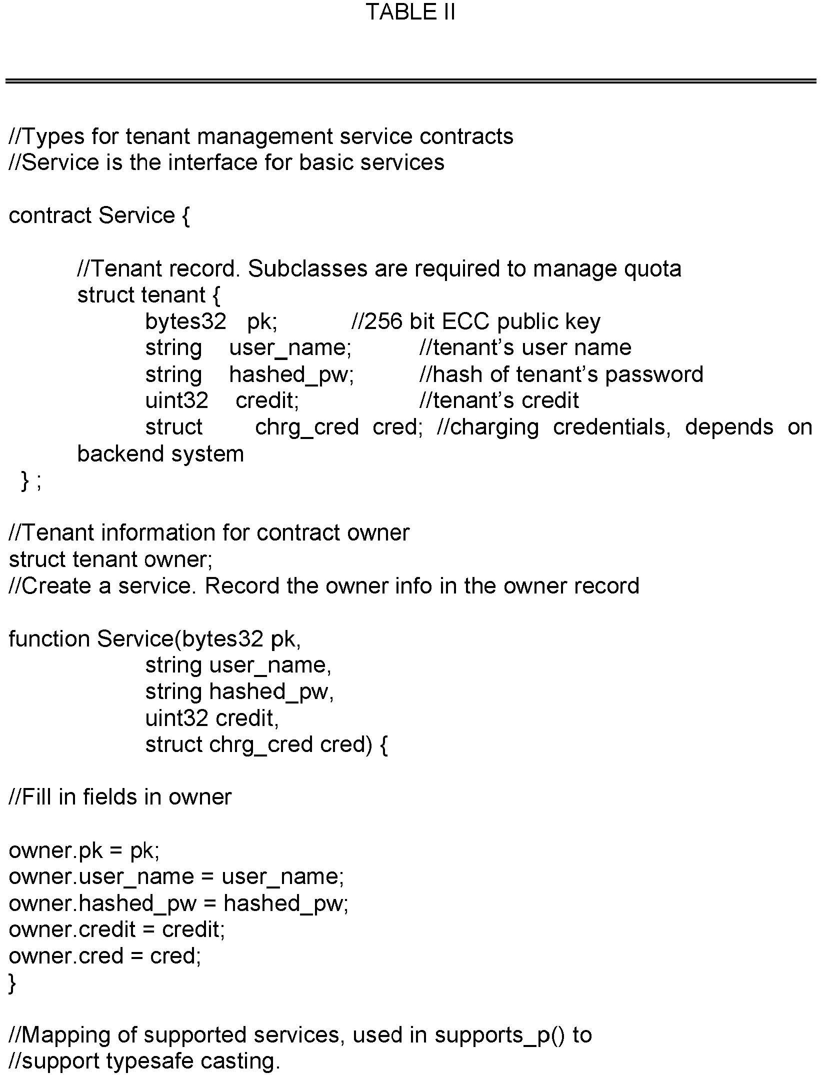

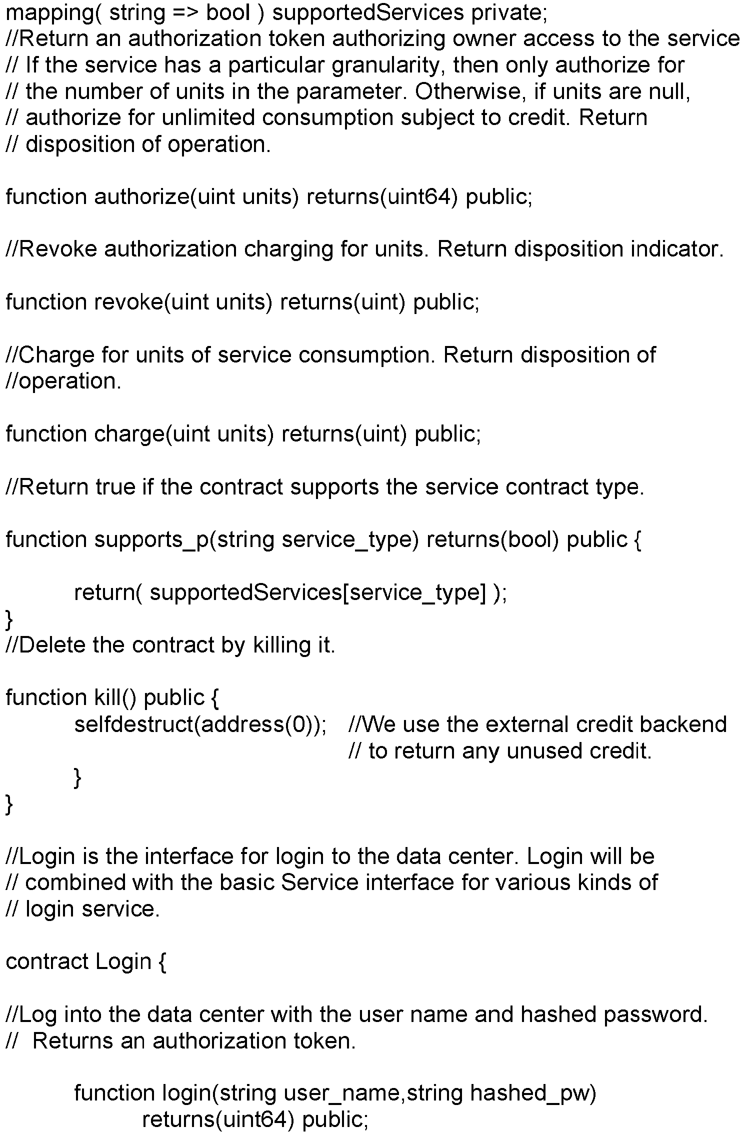

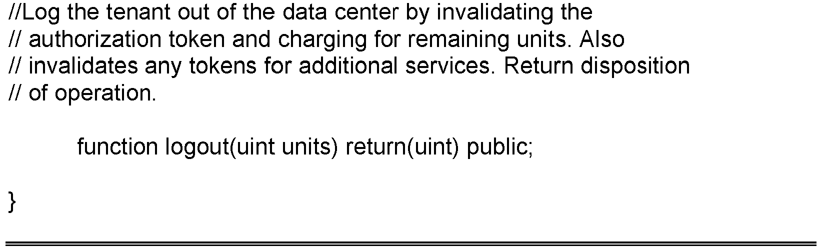

A tenant management contract may combine Service with other types, as may be exemplified by a pseudocode portion provided below. As illustrated, the pseudocode portion provides a definition for the *BasicLogin* contract type, a type that gives the tenant authorization to log into the data center using a remote shell in an example implementation of the present invention. The *BasicLogin* contract may be provided with two state variables - one each for recording disk and network quota, and an additional state variable containing the authorization token. The *BasicLogin()* constructor sets the disk and network quota, calls the *Service()* constructor to fill in the tenant information, and then records the types it supports for typesafe upcast. The Service contract type method *authorize()* is implemented by returning the authorization token, because the *BasicLogin* contract requires a user to login before being authorized. The *revoke()* method in contrast calls the *logout()* method to remove the tenant authorization. The *Service charge()* method charges for login time. Charges for monthly disk quota may be handled separately. The *login()* method checks if the user name and hashed password provided as parameters match the user name and password on the contract, and, if so, generates an authorization token. The *logout()* method returns any remaining credit to the external credit provider and invalidates the authorization token.

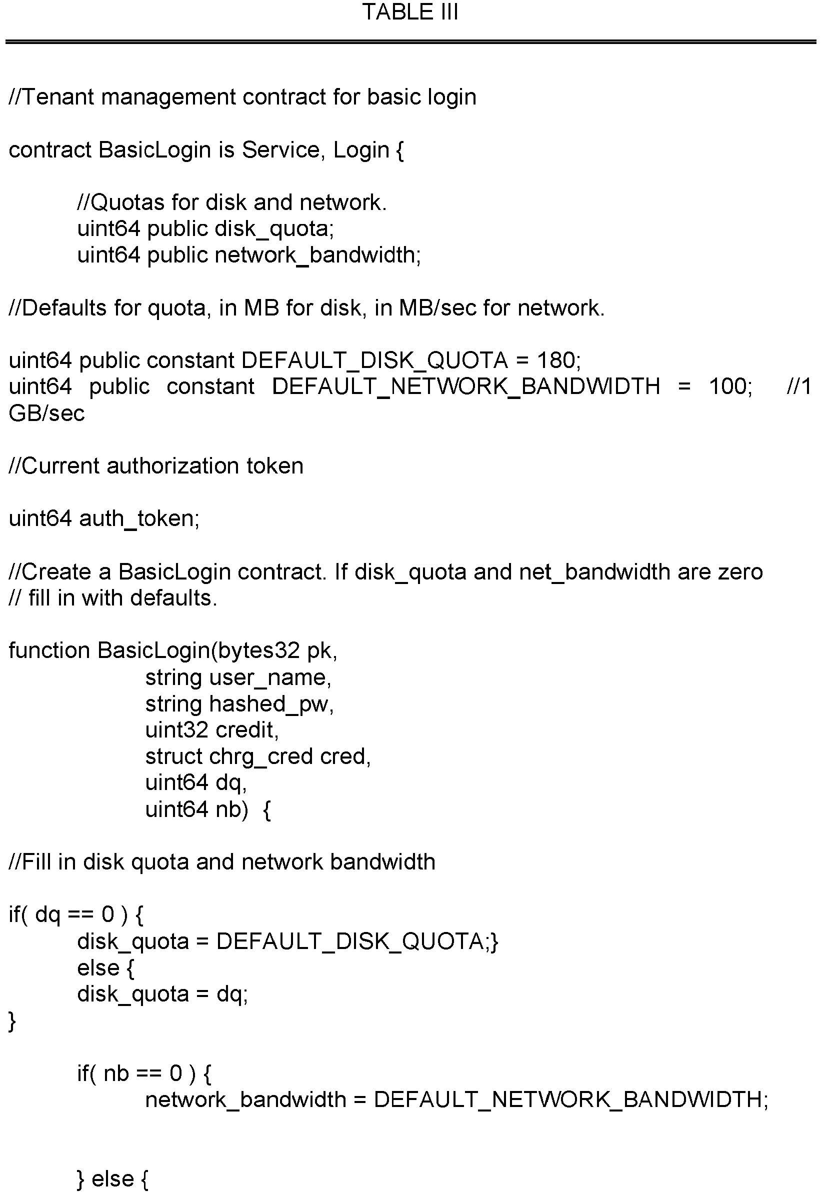

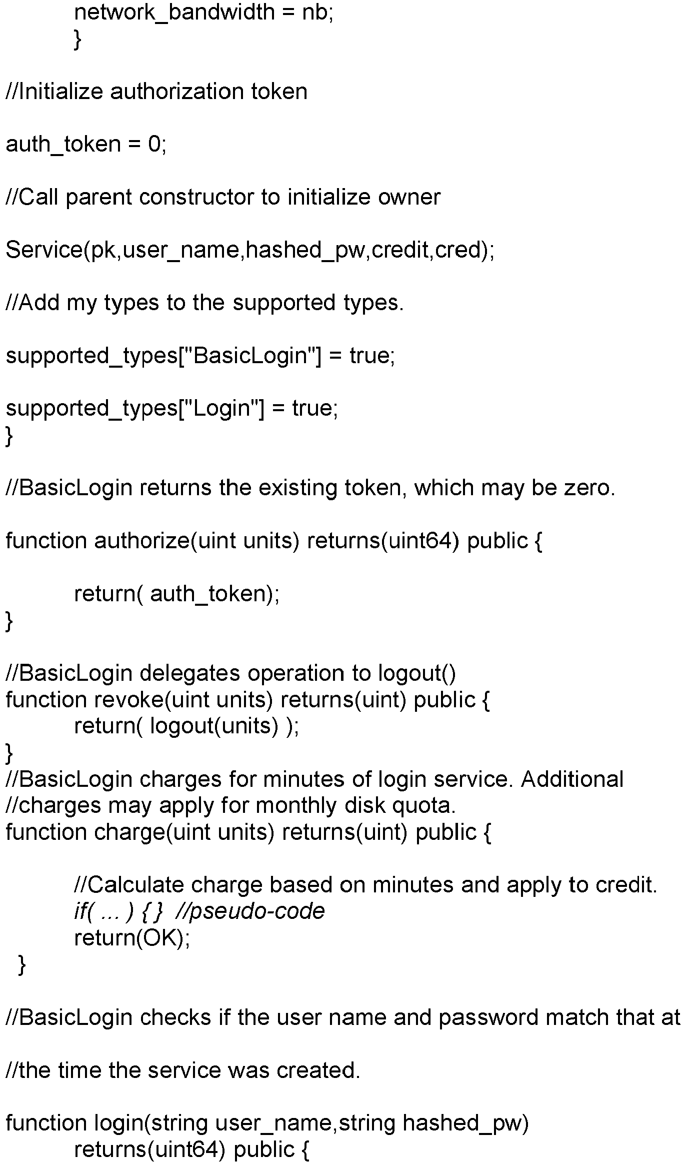

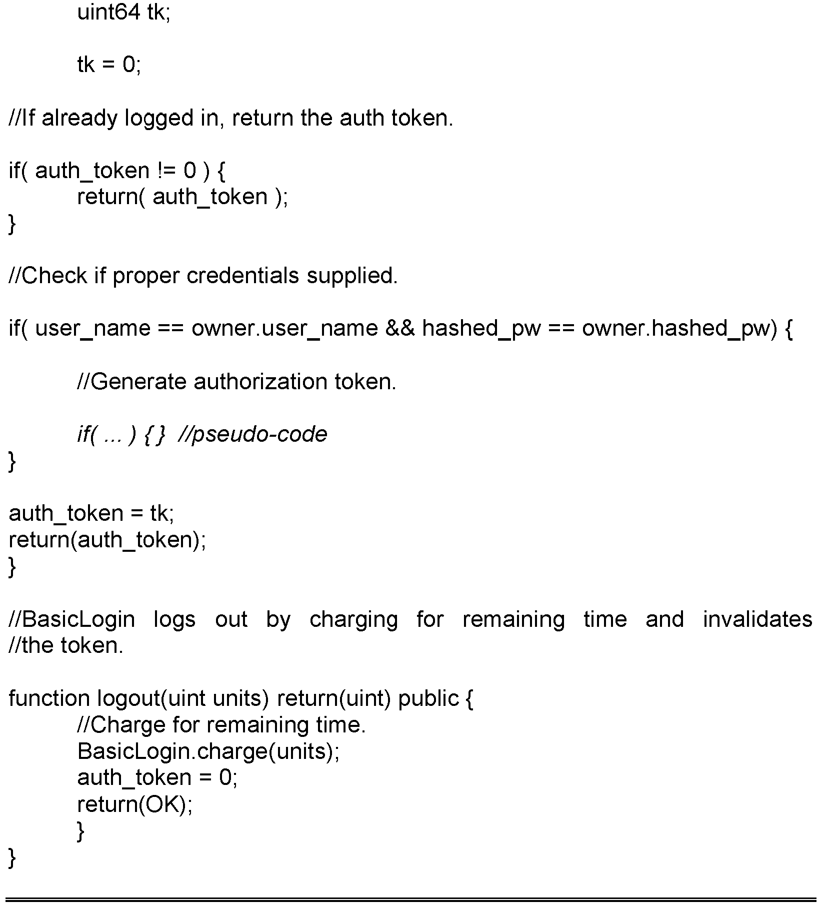

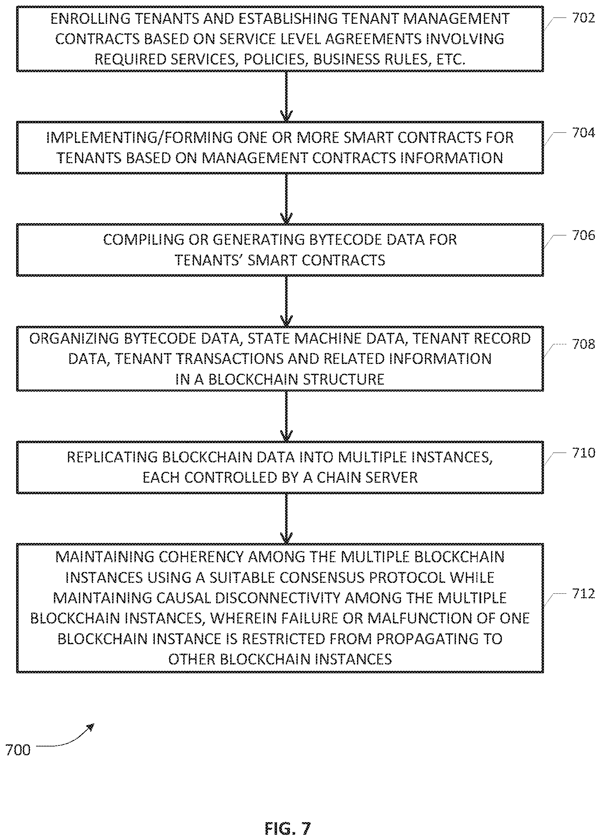

Referring now to FIG. 7, depicted therein is a flowchart illustrative of various blocks, steps and/or acts of an example tenant management method 700 that may be (re)combined in one or more arrangements, with or without blocks, steps and/or acts of additional flowcharts of the present disclosure, according to one or more embodiments of the present invention. At block 702, one or more tenants may be enrolled by or at a data center using a variety of enrollment methodologies described hereinabove. Pursuant thereto, tenant management contracts based on service level agreements involving required services, policies, business rules, etc., with respect to the tenants may be established, generated or otherwise obtained. At block 704, one or more smart contracts for the tenants may be implemented, formed or otherwise obtained based on management contracts information. Thereafter, tenants' smart contracts may be compiled into suitable bytecode that may be executed on a virtual machine regardless of any particular underlying hardware/computer platform implemented at the data center (block 706). Bytecode, tenant record data, state variables associated with state machines implementing for executing the smart contracts, tenant transactions and related information may be organized into a distributed digital ledger structure such as a blockchain (block 708), wherein the data of the blockchain may be replicated into multiple instances or replicas, each being controlled by a chain server (block 710).

As noted previously, coherency and consistency among the multiple blockchain Instances may be maintained by executing a suitable consensus protocol (e.g., upon every transaction in a blockchain replica, after a new block is created, or boot-up, or upon recovery from a failure, etc.). In one arrangement, causal disconnectivity among the multiple blockchain instances may be maintained or enforced while maintaining coherency/consensus, whereby failure or malfunction of one blockchain instance is restricted from propagating to other blockchain instances (block 712).

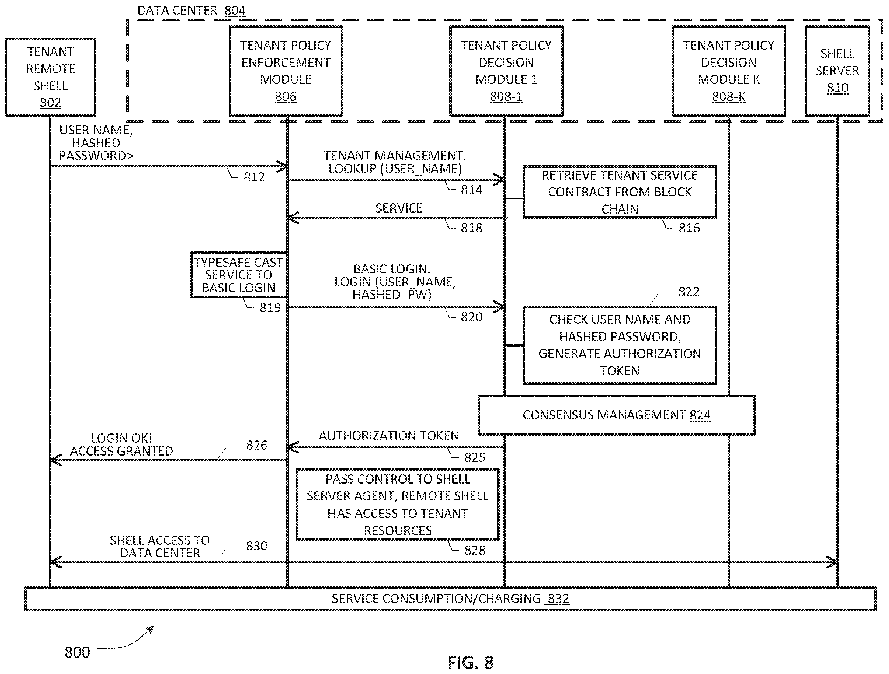

FIG. 8 depicts an example message flow diagram 800 with respect to service/resource authorization at a data center according to an embodiment of the present invention. By way of illustration, the message flow diagram 800 exemplifies a function call flow showing how a tenant is authorized by a tenant management system at data center 804 for service consumption, which may involve a service that is authorized and charged through a *BasicLogin* contract defined in example pseudocode portions set forth above. Consistent with the TMS architecture set forth in FIG. 2, a plurality of nodes comprising a TPEM 806 serving a tenant via a remote shell 802, a shell server 810, and TPDMs 808-1 to 808-K comprise the tenant management system of the data center 804. Skilled artisans will recognize that any remote user interface service such as a web browser running SSL can be utilized for facilitating login and launching of a service request process. One example service is a remote secure shell, although other remote user interface services may be employed in additional or alternative embodiments. Similar to the tenant processes set forth previously, the tenant's name and password, hashed on entry, may be input at the remote shell 802 (e.g., at the tenant's equipment to facilitate a suitable secure connection), which connects to TPEM 806 on a serving leaf server. All messages are encrypted with the public key of the recipient, so that only the recipient can read it. The following steps or acts relating to the message flow diagram 800 may then proceed, as referenced in FIG. 8 at applicable places:
(1) sending, by the user's remote shell, a request 812 for shell access, to TPEM 806 on the leaf server. The message includes the user name and hashed password, which may be suitably encrypted;
(2) calling, by TPEM 806, as noted at message flow path 814, a lookup() method on the TenantManagement contract as managed by TPDM 808-1 with the user name. The Service contract for the tenant is then accessed;
(3) fetching, by TPDM 808-1, the tenant's Service contract as noted at block 816;
(4) returning, by TPDM 808-1, a reference to the Service contract to TPEM 806 as noted at message flow path 818;
(5) typesafe casting, by TPEM 806, the Service contract to BasicLogin as noted at block 819;
(6) invoking, by TPEM 806, the login() method on the BasicLogin contract and passing in the user name and hashed password as noted at message flow path 820;
(7) checking, by TPDM 808-1, the login credentials and generating an authorization token as noted at block 822;
(8) running, by TPDM 808-1, a consensus protocol (e.g., RAFT) across the plurality of TPDMs 808-1 to 808-K, as noted at block 824;
(9) returning, by TPDM 808-1, the authorization token to TPEM 806 as noted at message flow path 825;
(10) returning, by TPEM 806 to the tenant's remote shell 802, indicating that the login was successful, resulting in granting access, as noted at message flow path 826;
(11) passing, by TPEM 806, control to the data center's shell server agent 810 on the same or another data center server, as noted at block 828;
(12) establishing secure access path 830 between the remote shell 802 and the data center shell server 810; and
(13) consuming/receiving services or resources and charging therefor as noted at service session 832.

Skilled artisans will recognize that additional and/or alternative services may be provided by writing smart contracts that extend the Service contract type to suit different tenants' requirements, constraints, policies, etc.

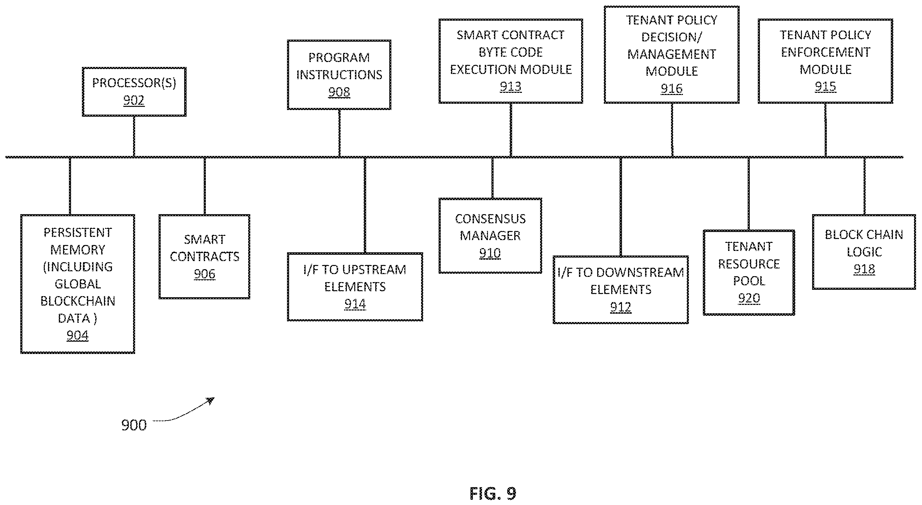

Turning to FIG. 9, depicted therein is a block diagram of a computer-implemented apparatus 900 that may be (re)configured and/or (re)arranged as a platform, system, or element to effectuate a leaf server node, a chain server node, or an integrated server node having TPEM/TPDM functionalities as part of a TMS architecture according to an embodiment of the present invention. One or more processors 902 may be operatively coupled to various modules that may be implemented in persistent memory for executing suitable program instructions or code portions with respect to effectuating various aspects of a tenant management methodology, e.g., service discovery, enrollment, consensus, blockchain logic, etc., as exemplified by modules 908, 910, 915, 916. A persistent memory storage system 904 for storing global/local blockchain data may be provided as local storage associated with the server apparatus 900. A smart contracts module 906 may be provided for storing smart contracts as well as their bytecode, which may be executed using a VM-based execution module 913 embodying a suitable state machine. Consensus protocol engine or manager 910 may be configured to execute one or more consensus protocols as described hereinabove. A chain server operating as a blockchain miner, e.g., as a node authorized to validate transactions, adding validated transactions to the blocks being built, broadcasting the completed blocks to other chain servers, etc., may be provided with suitable blockchain logic 918 as shown in FIG. 9. Where a node or platform is integrated with tenant resources (e.g., compute/storage resources), a local tenant resource pool 920 may be provided as part of the platform 900. Depending on the actual implementation, appropriate "downstream" interfaces (I/F) 912 and/or "upstream" I/Fs 914 may be provided for effectuating a network fabric operative to connect with other leaf servers, chain servers, storage devices, data center shell servers, operator policy management nodes, as well as other remote data centers, etc. Accordingly, depending on the context, interfaces selected from interfaces 912, 914 may sometimes be referred to as a first interface, a second interface, and the like.

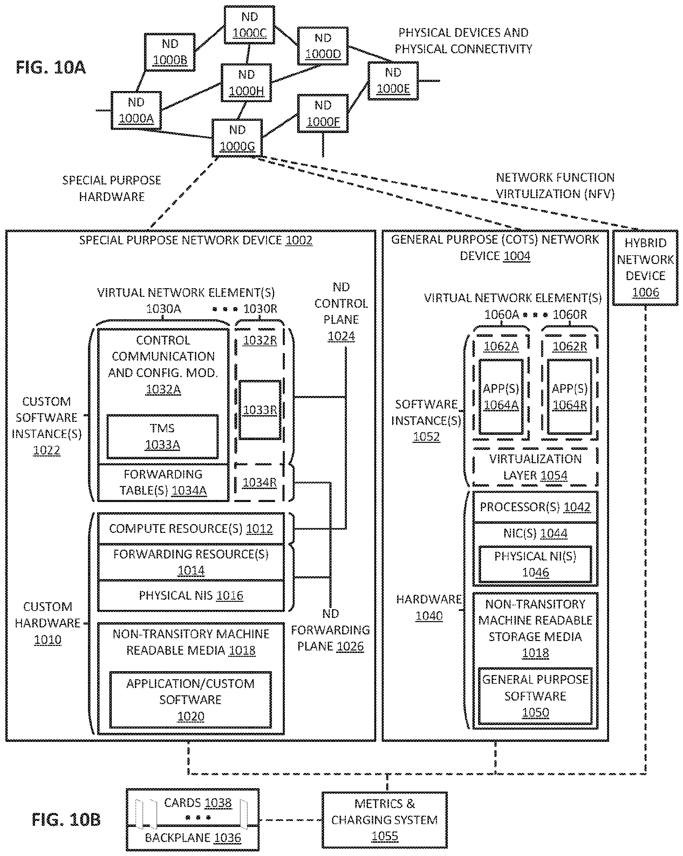

FIGS. 10A/10B illustrate connectivity between network devices (NDs) within an exemplary network, as well as three exemplary implementations of the NDs, according to some embodiments of the invention wherein at least a portion of the data center network environment 100 shown in FIG. 1 and/or the TMS architecture 200 shown in FIG. 2 may be implemented in a virtualized environment. FIG. 10A illustrates connectivity among a plurality of network devices (NDs) within an exemplary network, as well as three exemplary implementations of the NDs, according to some embodiments of the invention. In particular, FIG. 10A shows NDs 1000A-H, which may be representative of leaf servers, chain servers, data center shell servers, external storage nodes, as well as other remote data center nodes, and the like, wherein example connectivity is illustrated by way of lines between A-B, B-C, C-D, D-E, E-F, F-G, and A-G, as well as between H and each of A, C, D, and G. As noted elsewhere in the patent application, such NDs may be provided as physical devices, and the connectivity between these NDs can be wireless or wired (often referred to as a link). An additional line extending from NDs 1000A, E, and F illustrates that these NDs may act as ingress and egress nodes for the network (and thus, these NDs are sometimes referred to as edge NDs; while the other NDs may be called core NDs).

Two of the exemplary ND implementations in FIG. 10A are: (1) a special-purpose network device 1002 that uses custom application-specific integrated-circuits (ASICs) and a proprietary operating system (OS); and (2) a general purpose network device 1004 that uses common off-the-shelf (COTS) processors and a standard OS.

The special-purpose network device 1002 includes appropriate hardware 1010 (e.g., custom or application-specific hardware) comprising compute resource(s) 1012 (which typically include a set of one or more processors), forwarding resource(s) 1014 (which typically include one or more ASICs and/or network processors), and physical network interfaces (Nls) 1016 (sometimes called physical ports), as well as non-transitory machine readable storage media 1018 having stored therein suitable application-specific software or program instructions 1020 (e.g., switching, routing, call processing, etc). A physical NI is a piece of hardware in an ND through which a network connection (e.g., wirelessly through a wireless network interface controller (WNIC) or through plugging in a cable to a physical port connected to a network interface controller (NIC)) is made, such as those shown by the connectivity between NDs 1000A-H. During operation, the application software 1020 may be executed by the hardware 1010 to instantiate a set of one or more application-specific or custom software instance(s) 1022. Each of the custom software instance(s) 1022, and that part of the hardware 1010 that executes that application software instance (be it hardware dedicated to that application software instance and/or time slices of hardware temporally shared by that application software instance with others of the application software instance(s) 1022), form a separate virtual network element 1030A-R. Each of the virtual network element(s) (VNEs) 1030A-R includes a control communication and configuration module 1032A-R (sometimes referred to as a local control module or control communication module) and forwarding table(s) 1034A-R with respect to suitable application/service instances 1033A-R, such that a given virtual network element (e.g., 1030A) includes the control communication and configuration module (e.g., 1032A), a set of one or more forwarding table(s) (e.g., 1034A), and that portion of the application hardware 1010 that executes the virtual network element (e.g., 1030A) for supporting one or more suitable application instances 1033A, e.g., tenant enrollment, TPDM and/or TPEM functionality, blockchain logic, consensus protocols, smart contracts execution, and the like in relation to an TMS architecture/subsystem virtualization.

In an example implementation, the special-purpose network device 1002 is often physically and/or logically considered to include: (1) a ND control plane 1024 (sometimes referred to as a control plane) comprising the compute resource(s) 1012 that execute the control communication and configuration module(s) 1032A-R; and (2) a ND forwarding plane 1026 (sometimes referred to as a forwarding plane, a data plane, or a bearer plane) comprising the forwarding resource(s) 1014 that utilize the forwarding or destination table(s) 1034A-R and the physical Nls 1016. By way of example, where the ND is a data center resource node, the ND control plane 1024 (the compute resource(s) 1012 executing the control communication and configuration module(s) 1032A-R) is typically responsible for participating in controlling how bearer traffic (e.g., voice/data/video) is to be routed. Likewise, ND forwarding plane 1026 is responsible for receiving that data on the physical Nls 1016 (e.g., similar to I/Fs 912 and 914 in FIG. 9) and forwarding that data out the appropriate ones of the physical Nls 1016 based on the forwarding information.

FIG. 10B illustrates an exemplary way to implement the special-purpose network device 1002 according to some embodiments of the invention, wherein an example special-purpose network device includes one or more cards 1038 (typically hot pluggable) coupled to an interconnect mechanism. While in some embodiments the cards 1038 are of two types (one or more that operate as the ND forwarding plane 1026 (sometimes called line cards), and one or more that operate to implement the ND control plane 1024 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec) (RFC 4301 and 4309), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards may be coupled together through one or more interconnect mechanisms illustrated as backplane 1036 (e.g., a first full mesh coupling the line cards and a second full mesh coupling all of the cards).

Returning to FIG. 10A, an example embodiment of the general purpose network device 1004 includes hardware 1040 comprising a set of one or more processor(s) 1042 (which are often COTS processors) and network interface controller(s) 1044 (NICs; also known as network interface cards) (which include physical Nls 1046), as well as non-transitory machine readable storage media 1048 having stored therein software 1050, e.g., general purpose operating system software, similar to the embodiments set forth above in reference to FIG. 9 in one example. During operation, the processor(s) 1042 execute the software 1050 to instantiate one or more sets of one or more applications 1064A-R with respect to facilitating emergency call failure mitigation. While one embodiment does not implement virtualization, alternative embodiments may use different forms of virtualization - represented by a virtualization layer 1054 and software containers 1062A-R. For example, one such alternative embodiment implements operating system-level virtualization, in which case the virtualization layer 1054 represents the kernel of an operating system (or a shim executing on a base operating system) that allows for the creation of multiple software containers 1062A-R that may each be used to execute one of the sets of applications 1064A-R. In this embodiment, the multiple software containers 1062A-R (also called virtualization engines, virtual private servers, or jails) are each a user space instance (typically a virtual memory space); these user space instances are separate from each other and separate from the kernel space in which the operating system is run; the set of applications running in a given user space, unless explicitly allowed, cannot access the memory of the other processes. Another such alternative embodiment implements full virtualization, in which case: (1) the virtualization layer 1054 represents a hypervisor (sometimes referred to as a virtual machine monitor (VMM)) or a hypervisor executing on top of a host operating system; and (2) the software containers 1062A-R each represent a tightly isolated form of software container called a virtual machine that is run by the hypervisor and may include a guest operating system. A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications 1064A-R, as well as the virtualization layer 1054 and software containers 1062A-R if implemented, are collectively referred to as software instance(s) 1052. Each set of applications 1064A-R, corresponding software container 1062A-R if implemented, and that part of the hardware 1040 that executes them (be it hardware dedicated to that execution and/or time slices of hardware temporally shared by software containers 1062A-R), forms a separate virtual network element(s) 1060A-R.

The virtual network element(s) 1060A-R perform similar functionality to the virtual network element(s) 1030A-R - e.g., similar to the control communication and configuration module(s) 1032A and forwarding table(s) 1034A (this virtualization of the hardware 1040 is sometimes referred to as NFV architecture, as mentioned above. Thus, NFV may be used to consolidate many network equipment types onto industry standard high volume server hardware, physical switches, and physical storage, which could be located in data centers, NDs, and customer premise equipment (CPE). However, different embodiments of the invention may implement one or more of the software container(s) 1062A-R differently. For example, while embodiments of the invention may be practiced in an arrangement wherein each software container 1062A-R corresponds to one VNE 1060A-R, alternative embodiments may implement this correspondence at a finer level granularity (e.g., line card virtual machines virtualize line cards, control card virtual machine virtualize control cards, etc.); it should be understood that the techniques described herein with reference to a correspondence of software containers 1062A-R to VNEs also apply to embodiments where such a finer level of granularity is used.

In certain embodiments, the virtualization layer 1054 includes a virtual switch that provides similar forwarding services as a physical Ethernet switch. Specifically, this virtual switch forwards traffic between software containers 1062A-R and the NIC(s) 1044, as well as optionally between the software containers 1062A-R. In addition, this virtual switch may enforce network isolation between the VNEs 560A-R that by policy are not permitted to communicate with each other (e.g., by honoring virtual local area networks (VLANs)).

The third exemplary ND implementation in FIG. 10A is a hybrid network device 1006, which may include both custom ASICs/proprietary OS and COTS processors/standard OS in a single ND or a single card within an ND. In certain embodiments of such a hybrid network device, a platform VM (i.e., a VM that implements the functionality of the special-purpose network device 1002) could provide for para-virtualization to the application-specific hardware present in the hybrid network device 1006 for effectuating one or more TMS blocks, modules, and functionalities of a data center.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also in all of the above exemplary implementations, each of the VNEs (e.g., VNE(s) 1030A-R, VNEs 1060A-R, and those in the hybrid network device 1006) receives data on the physical Nls (e.g., 1016, 1046) and forwards that data out the appropriate ones of the physical Nls (e.g., 1016, 1046).

Furthermore, an example NFV implementation such as the one described above may also be integrated or otherwise associated with a metrics/charging system component 1055, at least parts of which may be interfaced to various components, e.g., TMS 1033A, compute resources 1012, virtualization layers 1054, etc., depending on whether special purpose or COTS network devices are used.

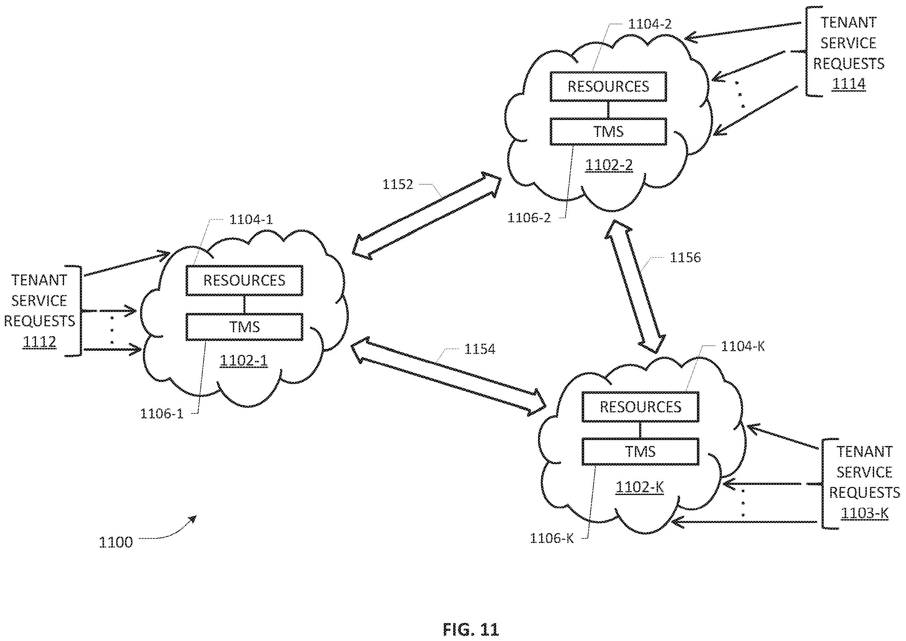

FIG. 11 depicts an example distributed data center network environment 1100 having multiple cloud-based data centers that may be managed according to an embodiment of the present invention. By way of illustration, cloud-based data centers 1102-1 to 1102-K are representative of data centers distributed across a geographical area (e.g., regional, national, transcontinental areas), wherein each data center may be configured to handle incoming service requests from a plurality of tenants served within a serving area. In FIG. 11, data center 1102-1 comprising a TMS 1106-1 is operative to host resources/services 1104-1. Likewise, data center 1102-2 comprises TMS 1106-2 and resources/services 1104-2 and data center 1102-K comprises TMS 1106-K and resources/services 1104-K. It will be apparent that each of TMS 1106-1 to 1106-K may be arranged in an architecture similar to the TMS architecture 200 shown in FIG. 2, including respective chain servers, leaf servers and blockchain storage devices. Example data centers 1102-1 to 1102-K may be interconnected in a wide area backbone network 1152, 1154, 1156, wherein data center 1102-1 is operative to receive incoming requests 1112, data center 1102-2 is operative to receive incoming requests 1114 and data center 1102-K is operative to receive incoming requests 1116. TMS subsystems 1106-1 to 1106-K of data centers 1102-1 to 1102-K may be configured to execute an internal consensus protocol among the local chain servers (i.e., intra-DC consensus) as well as one or more external consensus protocols with respect to the rest of the servers of the distributed data centers (i.e., inter-DC consensus) of the cloud computing environment. One skilled in the art will recognize that the consensus protocols employed for achieving intra-DC consensus may be different from or the same as the consensus protocols for achieving inter-DC consensus. To minimize delays among the distributed data centers, backbone network 1152, 1154, 1156 may be formed as a high-speed optical fiber network in one example implementation. Within each data center, tenant requests for resources/services may be handled in a manner similar to the embodiments set forth in detail hereinabove.

It will be recognized that communication latencies between the data centers 1102-1 to 1102-K may determine whether real-time charging transactions can be processed. In one implementation, the distributed data center environment 1100 may be architected such that communication plus processing latencies are under a preconfigured timeout (e.g., 20-second TCP timeout) for effectuating real-time charging.

It will be apparent upon reference hereto that an embodiment of tenant management scheme comprising the smart contract framework in conjunction with a distributed digital ledger as disclosed herein can be extended to other data center services, including higher level services such as media access, VoIP, etc. To do so, a contract type may be written, e.g., inheriting from a Service, with additional service interface contract types being written where necessary, such as the Login service contract type, for example. A concrete contract type may then implement the new methods relative to the new services on the contract.

As noted above, various hardware and software blocks configured for effectuating a TMS architecture for a localized data center or a distributed collection of data centers may be embodied in NDs, NEs, NFs, VNE/VNF/VND, virtual appliances, virtual machines, and the like, as well as electronic devices and machine-readable media, which may be configured as any of the apparatuses described herein (e.g., without limitation, FIGS. 2, 9 and 10A/10B). Accordingly, for purposes of at least one embodiment of the present invention, the following detailed description may be additionally and/or alternatively provided, *mutatis mutandis,* in an example implementation.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors (e.g., wherein a processor is a microprocessor, controller, microcontroller, central processing unit, digital signal processor, application specific integrated circuit, field programmable gate array, other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) (NI(s)) to establish network connections (to transmit and/or receive code and/or data using propagating signals) with other electronic devices. For example, the set of physical Nls (or the set of physical NI(s) in combination with the set of processors executing code) may perform any formatting, coding, or translating to allow the electronic device to send and receive data whether over a wired and/or a wireless connection. In some embodiments, a physical NI may comprise radio circuitry capable of receiving data from other electronic devices over a wireless connection or channel and/or sending data out to other devices via a wireless connection or channel. This radio circuitry may include transmitter(s), receiver(s), and/or transceiver(s) suitable for radiofrequency communication. The radio circuitry may convert digital data into a radio signal having the appropriate parameters (e.g., frequency, timing, channel, bandwidth, etc.). The radio signal may then be transmitted via antennas to the appropriate recipient(s).

In some embodiments, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate via wire through plugging in a cable to a physical port connected to a NIC. One or more parts of an embodiment of the invention may be implemented using different combinations of software, firmware, and/or hardware.

A network device (ND) or network element (NE) as set hereinabove is an electronic device that communicatively interconnects other electronic devices on the network (e.g., other network devices, end-user devices, etc.). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video). The apparatus, and method performed thereby, of the present invention may be embodied in one or more ND/NE nodes that may be, in some embodiments, communicatively connected to other electronic devices on the network (e.g., other network devices, servers, nodes, terminals, etc.). The example NE/ND node may comprise processor resources, memory resources, and at least one interface. These components may work together to provide various TMS functionalities as disclosed herein.

Memory may store code (which is composed of software instructions and which is sometimes referred to as computer program code or a computer program) and/or data using non-transitory machine-readable (e.g., computer-readable) media, such as machine-readable storage media (e.g., magnetic disks, optical disks, solid state drives, ROM, flash memory devices, phase change memory) and machine-readable transmission media (e.g., electrical, optical, radio, acoustical or other form of propagated signals - such as carrier waves, infrared signals). For instance, memory may comprise non-volatile memory containing code to be executed by processor. Where memory is non-volatile, the code and/or data stored therein can persist even when the network device is turned off (when power is removed). In some instances, while network device is turned on that part of the code that is to be executed by the processor(s) may be copied from non-volatile memory into volatile memory of network device.

The at least one interface may be used in the wired and/or wireless communication of signaling and/or data to or from network device. For example, interface may perform any formatting, coding, or translating to allow network device to send and receive data whether over a wired and/or a wireless connection. In some embodiments, interface may comprise radio circuitry capable of receiving data from other devices in the network over a wireless connection and/or sending data out to other devices via a wireless connection. In some embodiments, interface may comprise network interface controller(s) (NICs), also known as a network interface card, network adapter, local area network (LAN) adapter or physical network interface. The NIC(s) may facilitate in connecting the network device to other devices allowing them to communicate via wire through plugging in a cable to a physical port connected to a NIC. As explained above, in particular embodiments, the processor may represent part of interface, and some or all of the functionality described as being provided by interface may be provided more specifically by processor.

The components of network device are each depicted as separate boxes located within a single larger box for reasons of simplicity in describing certain aspects and features of network device disclosed herein. In practice however, one or more of the components illustrated in the example network device may comprise multiple different physical elements

One or more embodiments described herein may be implemented in the network device by means of a computer program comprising instructions which, when executed on at least one processor, cause the at least one processor to carry out the actions according to any of the invention's features and embodiments, where appropriate. While the modules are illustrated as being implemented in software stored in memory, other embodiments implement part or all of each of these modules in hardware.

In one embodiment, the software implements the modules described with regard to the Figures herein. During operation, the software may be executed by the hardware to instantiate a set of one or more software instance(s). Each of the software instance(s), and that part of the hardware that executes that software instance (be it hardware dedicated to that software instance, hardware in which a portion of available physical resources (e.g., a processor core) is used, and/or time slices of hardware temporally shared by that software instance with others of the software instance(s)), form a separate virtual network element. Thus, in the case where there are multiple virtual network elements, each operates as one of the network devices.

Some of the described embodiments may also be used where various levels or degrees of virtualization has been implemented. In certain embodiments, one, some or all of the applications relating to a TMS architecture may be implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware directly on a hypervisor (in which case the unikernel is sometimes described as running within a LibOS virtual machine), or in a software container, embodiments can be implemented fully with unikernels running directly on a hypervisor represented by virtualization layer, unikernels running within software containers represented by instances, or as a combination of unikernels and the above-described techniques (e.g., unikernels and virtual machines both run directly on a hypervisor, unikernels and sets of applications that are run in different software containers).

The instantiation of the one or more sets of one or more applications, as well as virtualization if implemented are collectively referred to as software instance(s). Each set of applications, corresponding virtualization construct if implemented, and that part of the hardware that executes them (be it hardware dedicated to that execution and/or time slices of hardware temporally shared by software containers), forms a separate virtual network element(s).

A virtual network is a logical abstraction of a physical network that provides network services (e.g., L2 and/or L3 services). A virtual network can be implemented as an overlay network (sometimes referred to as a network virtualization overlay) that provides network services (e.g., Layer 2 (L2, data link layer) and/or Layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services also include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNls (forwarding and routing instances) for different such virtual networks, and L3 (e.g., IP/MPLS) tunneling encapsulation across the underlay network)). Example network services that may be hosted by a data center may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

Embodiments of a TMS architecture may involve distributed routing, centralized routing, or a combination thereof. The distributed approach distributes responsibility for generating the reachability and forwarding information across the NEs; in other words, the process of neighbor discovery and topology discovery is distributed. For example, where the network device is a traditional router, the control communication and configuration module(s) of the ND control plane typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane. The ND control plane programs the ND forwarding plane with information (e.g., adjacency and route information) based on the routing structure(s). For example, the ND control plane programs the adjacency and route information into one or more forwarding table(s) (e.g., Forwarding Information Base (FIB), Label Forwarding Information Base (LFIB), and one or more adjacency structures) on the ND forwarding plane. For Layer 2 forwarding, the ND can store one or more bridging tables that are used to forward data based on the layer 2 information in that data. While the above example uses the special-purpose network device, the same distributed approach can be implemented on a general purpose network device and a hybrid network device, e.g., as exemplified in the embodiments of FIGS. 10A/10B described above.

Skilled artisans will further recognize that an example TMS arrangement may also be implemented using various SDN architectures based on known protocols such as, e.g., OpenFlow protocol or Forwarding and Control Element Separation (ForCES) protocol, etc. Regardless of whether distributed or centralized networking is implemented with respect to a data center management, some NDs may be configured to include functionality for authentication, authorization, and accounting (AAA) protocols (e.g., RADIUS (Remote Authentication Dial-In User Service), Diameter, and/or TACACS+ (Terminal Access Controller Access Control System Plus), which may interoperate with TPEM/TPDM functionalities of TMS. AAA can be provided through a client/server model, where the AAA client is implemented on a ND and the AAA server can be implemented either locally on the ND or on a remote electronic device coupled with the ND. Authentication is the process of identifying and verifying a subscriber. For instance, a subscriber/tenant might be identified by a combination of a username and a password or through a unique key. Authorization determines what a subscriber can do after being authenticated, such as gaining access to certain electronic device information resources (e.g., through the use of access control policies). Accounting is recording user activity. By way of a summary example, end user devices may be coupled (e.g., through an access network) through an edge ND (supporting AAA processing) coupled to core NDs coupled to electronic devices implementing servers of service/content providers. AAA processing is performed to identify for a subscriber the subscriber record stored in the AAA server for that subscriber. A subscriber record includes a set of attributes (e.g., subscriber name, password, authentication information, access control information, rate-limiting information, policing information) used during processing of that subscriber's traffic.

Certain NDs (e.g., certain edge NDs) internally represent end user devices (or sometimes customer premise equipment (CPE) such as a residential gateway (e.g., a router, modem)) using subscriber circuits. A subscriber circuit uniquely identifies within the ND a subscriber session and typically exists for the lifetime of the session. Thus, a ND typically allocates a subscriber circuit when the subscriber connects to that ND, and correspondingly de-allocates that subscriber circuit when that subscriber disconnects. Each subscriber session represents a distinguishable flow of packets communicated between the ND and an end user device (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for digital subscriber line (DSL) services and requires installation of a PPP client that enables the subscriber to enter a username and a password, which in turn may be used to select a subscriber record. When DHCP is used (e.g., for cable modem services), a username typically is not provided; but in such situations other information (e.g., information that includes the MAC address of the hardware in the end user device (or CPE)) is provided. The use of DHCP and CLIPS on the ND captures the MAC addresses and uses these addresses to distinguish subscribers and access their subscriber records.

Accordingly, one skilled in the art will recognize that various apparatuses and systems with respect to the foregoing embodiments, as well as the underlying network infrastructures set forth above may be architected in a virtualized environment according to a suitable NFV architecture in additional or alternative embodiments of the present patent disclosure. For instance, various physical resources, databases, services, applications and functions supported in a TMS-based data center set forth hereinabove may be provided as virtual appliances, machines or functions, wherein the resources and applications are virtualized into suitable VNFs) or virtual network elements (VNEs) via a suitable virtualization layer whose overall management and orchestration functionality may be supported by a virtualized infrastructure manager (VIM) in conjunction with a VNF manager and an NFV orchestrator. An Operation Support System (OSS) and/or Business Support System (BSS) component may typically be provided for handling network-level functionalities such as network management, fault management, configuration management, service management, and subscriber management, etc., which may interface with VNF layer and NFV orchestration components via suitable interfaces.

Furthermore, skilled artisans will also appreciate that such an example cloud-computing data center environment may comprise one or more of private clouds, public clouds, hybrid clouds, community clouds, distributed clouds, multiclouds and interclouds (e.g., "cloud of clouds"), and the like.

In the above-description of various embodiments of the present disclosure, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and may not be interpreted in an idealized or overly formal sense expressly so defined herein.

At least some example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. Such computer program instructions may be provided to a processor circuit of a general purpose computer circuit, special purpose computer circuit, and/or other programmable data processing circuit to produce a machine, so that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). Additionally, the computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

As pointed out previously, tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a ROM circuit, an erasable programmable read-only memory (EPROM or Flash memory) circuit, a portable compact disc read-only memory (CD-ROM), and a portable digital video disc read-only memory (DVD/Blu-ray). The computer program instructions may also be loaded onto or otherwise downloaded to a computer and/or other programmable data processing apparatus to cause a series of operational steps to be performed on the computer and/or other programmable apparatus to produce a computer-implemented process. Accordingly, embodiments of the present invention may be embodied in hardware and/or in software (including firmware, resident software, micro-code, etc.) that runs on a processor or controller, which may collectively be referred to as "circuitry," "a module" or variants thereof. Further, an example processing unit may include, by way of illustration, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGA) circuits, any other type of integrated circuit (IC), and/or a state machine. As can be appreciated, an example processor unit may employ distributed processing in certain embodiments.

Further, in at least some additional or alternative implementations, the functions/acts described in the blocks may occur out of the order shown in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Furthermore, although some of the diagrams include arrows on communication paths to show a primary direction of communication, it is to be understood that communication may occur in the opposite direction relative to the depicted arrows. Finally, other blocks may be added/inserted between the blocks that are illustrated.

It should therefore be clearly understood that the order or sequence of the acts, steps, functions, components or blocks illustrated in any of the flowcharts depicted in the drawing Figures of the present disclosure may be modified, altered, replaced, customized or otherwise rearranged within a particular flowchart, including deletion or omission of a particular act, step, function, component or block. Moreover, the acts, steps, functions, components or blocks illustrated in a particular flowchart may be inter-mixed or otherwise inter-arranged or rearranged with the acts, steps, functions, components or blocks illustrated in another flowchart in order to effectuate additional variations, modifications and configurations with respect to one or more processes for purposes of practicing the teachings of the present patent disclosure.

Although various embodiments have been shown and described in detail, the claims are not limited to any particular embodiment or example. None of the above Detailed Description should be read as implying that any particular component, element, step, act, or function is essential such that it must be included in the scope of the claims. Reference to an element in the singular is not intended to mean "one and only one" unless explicitly so stated, but rather "one or more." Accordingly, those skilled in the art will recognize that the exemplary embodiments described herein can be practiced with various modifications and alterations within the scope of the claims appended below. The scope of protection for the invention is limited by the attached claims.

## Claims

1. A system (112, 200, 900) for managing a cloud-based data center (108) operative to support a plurality of tenants (102-1 to 102-N) which request access to at least one of resources and services from the data center, the system comprising:
a plurality of leaf servers (204-1 to 204-K) each configured to execute a tenant policy enforcement module (210) operative to facilitate enrollment of one or more tenants for the resources and services supported by the data center (108) and to control the one or more tenants' access to the at least one of the resources and services upon authentication and authorization of the one or more tenants;
a plurality of chain servers (202-1 to 202-M) each configured to execute a tenant policy decision module (212-1 to 212-M) in association with a smart contract execution module (214-1 to 214-M), wherein the tenant policy decision module (212-1) executing on a chain server (201-1) is operative responsive to a request from a leaf server (204-1 to 204-K) for access on behalf of a tenant to the at least one of resources and services provided by the plurality of leaf servers (108);
a plurality of persistent storage devices (206-1 to 206-M) associated with the plurality of chain servers (202-1 to 202-M), wherein each persistent storage device (206-1 to 206-M) is coupled to a corresponding chain server (202-1 to 202-M) and configured to store tenant records in a blockchain replica (216-1 to 216-M), wherein each tenant record (500) is operative to contain compiled bytecode generated from one or more smart contracts associated with a tenant's service management agreement, a plurality of state variables describing a current state of the tenant's account, and one or more data fields operative to support blockchain management and navigation within the blockchain replica (216-1 to 216-M).; and
a communications network (250) interconnecting the plurality of leaf servers (204-1 to 204-K), the plurality of chain servers (202-1 to 202-M) and at least a subset of the plurality of the persistent storage devices (206-1 to 206-M) for effectuating communications there between, wherein each of the plurality of the chain servers (202-1 to 202-M) comprises a consensus protocol engine (910) operative to maintain consensus among the blockchain replicas (216-1 to 216-M) stored in the plurality of persistent storage devices (206-1 to 206-M).

2. The system (112, 200, 900) as recited in claim 1, wherein each persistent storage device (206-1 to 206-M) is causally disconnected from other persistent storage devices with respect to a malfunction on any of the other persistent storage devices.

3. The system (112, 200, 900) as recited in claim 1, wherein the resources and services supported by the data center (108) comprise at least one of cloud storage resources, processor compute resources, network bandwidth resources, virtualized network infrastructure resources, Software as a Service (SaaS) services, Platform as a Service (PaaS) services, Infrastructure as a Service (laaS) services, streaming media services, voice telephony services and one or more inline services selected from Deep Packet Inspection (DPI) services, Virus Scanning (VS) services, Intrusion Detection and Prevention (IDP) services, Firewall (FW) filtering services and Network Address Translation (NAT) services.

4. A method (700) of managing a cloud-based data center (108) operative to support a plurality of tenants (102-1 to 102-N) ) which request access to one or more resources or services from the data center, by a system comprising a plurality of leaf servers, a plurality of chain servers, a plurality of persistent storage devices associated with the plurality of chain servers, wherein each persistent storage device (206-1 to 206-M) is coupled to a corresponding chain server (202-1 to 202-M) and configured to store tenant records in a blockchain replica (216-1 to 216-M), , the method (700) comprising:
enrolling (702), by a tenant policy enforcement module provided on each of the leaf servers, of one or more tenants (102-1 to 102-N) for obtaining resources and services supported by the data center (108), wherein the one or more tenants request at least one of the resources and services from the data center;
controlling, by the tenant policy enforcement module, the one or more tenants' access to the at least one of the resources and servers upon authentication and authorization of the one or more tenants,
executing, by each of the plurality of chain servers, a tenant policy decision module in association with a smart contract execution module, wherein the tenant policy decision module executing on a chain server is responsive to a request from a leaf server for access on behalf of a tenant to the at least one of resources and services provided by the plurality of leaf servers;
implementing (704) one or more smart contracts by a tenant policy decision module (2212-1 to 212-M), in association with the smart contract execution module provided on the chain servers executing, on the plurality of chain servers (202-1 to 202-M) for each of the tenants (102-1 to 102-N) responsive to the enrolling of the tenants (102-1 to 102-N);
compiling (706) the one or more smart contracts into bytecode data;
organizing (708) tenant records in the blockchain replica (216-1 to 216-M) associated with a corresponding chain server (202-1 to 202-M) and storing the tenant record on the persistent storage device, wherein each persistent storage device is coupled to a corresponding chain server, the tenant records each containing the compiled bytecode generated from the one or more smart contracts created with respect to a tenant's service management agreement, a plurality of state variables describing a current state of the tenant's account, and one or more data fields operative to support blockchain management and navigation within the blockchain replica (216-1 to 216-M); interconnecting the plurality of leaf servers, the plurality of chain servers and at least a subset of the plurality of persistent storage devices to a communications network for effecting communication there between, and
maintaining (712) coherency among the blockchain replicas (216-1 to 216-M) by executing a consensus protocol engine (910) on at least a portion of the plurality of chain servers (202-1 to 202-M).

5. The method (700) as recited in claim 4, wherein each blockchain replica (216-1 to 216-M) is stored in a persistent storage device (206-1 to 206-M) associated with the corresponding chain server (202-1 to 202-M), and the method (700) further comprising causally disconnecting (712) each persistent storage device from other persistent storage devices with respect to a malfunction on any of the other persistent storage devices.

6. The method (700, 400) as recited in claim 4, wherein the enrolling of a tenant comprises:
connecting (404) via a web portal executing at a tenant's site to a tenant policy enforcement module residing on a leaf server (204-1 to 204-K) of the data center (108);
obtaining (406) a public key generated by the tenant using a cryptographic process, the tenant's name and an encrypted password operative to identify an account associated with the tenant, and credit information comprising at least one of the tenant's credit card number, bank routing information and charging policy options;
initializing (410) an initial amount of credit associated with the tenant's account;
identifying (410) one or more resources or services authorized to be consumed by the tenant;
selecting (412) one or more service contract types based on the tenant's input data and the one or more identified resources and services for the tenant;
parameterizing (414) the one or more service contract types and communicating parameterized service contract data to the tenant policy decision module (212-1); and
creating (416) a services management contract for the tenant and installing the services management contract into a mapping database indexed to at least a portion of the tenant's input data.

7. The method (700, 800) as recited in claim 4, further comprising:
upon receiving a service request (812) propagated from a leaf server on behalf of a requesting tenant, generating an authentication token (825) based on obtaining consensus among the plurality of tenant policy decision modules (212-1 to 212-M; 808-1 to 808-K) responsive to executing the consensus protocol engine (910);
providing (826) the authentication token to the requesting tenant for facilitating a secure access path to the data center (108, 804); and
establishing (832) a service consumption session between the requesting tenant and the data center (108, 804) via the secure access path with respect to consuming a requested resource or service.

8. The method (700) as recited in claim 4, wherein the service request comprises a request relating to at least one of cloud storage resources, processor compute resources, network bandwidth resources, virtualized network infrastructure resources, Software as a Service (SaaS) services, Platform as a Service (PaaS) services, Infrastructure as a Service (laaS) services, streaming media services, voice telephony services and one or more inline services selected from Deep Packet Inspection (DPI) services, Virus Scanning (VS) services, Intrusion Detection and Prevention (IDP) services, Firewall (FW) filtering services and Network Address Translation (NAT) services.

9. A non-transitory machine-readable storage medium (908) having program instructions thereon, which when executed by a system as mentioned in any of claims 1 to 3 are configured to perform a method as mentioned in any of the claims 4 to 8.

## Patentansprüche

1. System (112, 200, 900) zum Verwalten eines Cloud-basierten Rechenzentrums (108), das zum Unterstützen einer Mehrzahl von Mandanten (102-1 bis 102-N) ausgelegt ist, die Zugriff auf mindestens eine/n von Ressourcen und Diensten vom Rechenzentrum anfordern, wobei das System umfasst:
eine Mehrzahl von Leaf-Servern (204-1 bis 204-K), die jeweils zum Ausführen eines Mandantenrichtliniendurchsetzungsmoduls (210) konfiguriert sind, das zum Ermöglichen von Registrierung eines oder mehrerer Mandanten für die vom Rechenzentrum (108) unterstützten Ressourcen und Dienste und zum Kontrollieren des Zugriffs des einen oder der mehreren Mandanten auf die/den mindestens eine/n der Ressourcen und Dienste bei Authentifizierung und Autorisierung des einen oder der mehreren Mandanten ausgelegt ist;
eine Mehrzahl von Chain-Servern (202-1 bis 202-M), die jeweils zum Ausführen eines Mandantenrichtlinienentscheidungsmoduls (212-1 bis 212-M) in Verbindung mit einem Smart-Contract-Ausführungsmodul (214-1 bis 214-M) konfiguriert sind, wobei das Mandantenrichtlinienentscheidungsmodul (212-1), das auf einem Chain-Server (201-1) ausgeführt wird, so ausgelegt ist, dass es auf eine Anforderung von einem Leaf-Server (204-1 bis 204-K) für Zugriff im Auftrag eines Mandanten auf die/den mindestens eine/n von Ressourcen und Diensten, die von der Mehrzahl von Leaf-Servern (108) bereitgestellt werden, anspricht;
eine Mehrzahl von persistenten Speichervorrichtungen (206-1 bis 206-M), die mit der Mehrzahl von Chain-Servern (202-1 bis 202-M) assoziiert ist, wobei jede persistente Speichervorrichtung (206-1 bis 206-M) mit einem entsprechenden Chain-Server (202-1 bis 202-M) gekoppelt und zum Speichern von Mandantendatensätzen in einer Blockchain-Replik (216-1 bis 216-M) konfiguriert ist, wobei jeder Mandantendatensatz (500) so ausgelegt ist, dass er kompilierten Bytecode, der aus einem oder mehreren Smart Contracts generiert wird, die mit einer Dienstverwaltungsvereinbarung eines Mandanten assoziiert sind, eine Mehrzahl von Zustandsvariablen, die einen aktuellen Zustand des Kontos des Mandanten beschreiben, und ein oder mehrere Datenfelder enthält, die zum Unterstützen von Blockchain-Verwaltung und -Navigation innerhalb der Blockchain-Replik (216-1 bis 216-M) ausgelegt sind; und
ein Kommunikationsnetzwerk (250), das die Mehrzahl von Leaf-Servern (204-1 bis 204-K), die Mehrzahl von Chain-Servern (202-1 bis 202-M) und zumindest eine Teilmenge der Mehrzahl der persistenten Speichervorrichtungen (206-1 bis 206-M) zum Durchführen von Kommunikationen dazwischen miteinander verbindet, wobei jeder der Mehrzahl der Chain-Server (202-1 bis 202-M) eine Konsensprotokoll-Engine (910) umfasst, die zum Aufrechterhalten von Konsens zwischen den in der Mehrzahl von persistenten Speichervorrichtungen (206-1 bis 206-M) gespeicherten Blockchain-Repliken (216-1 bis 216-M) ausgelegt ist.

2. System (112, 200, 900) nach Anspruch 1, wobei jede persistente Speichervorrichtung (206-1 bis 206-M) von anderen persistenten Speichervorrichtungen bezüglich einer Funktionsstörung auf einer der anderen persistenten Speichervorrichtungen kausal getrennt wird.

3. System (112, 200, 900) nach Anspruch 1, wobei die vom Rechenzentrum (108) unterstützten Ressourcen und Dienste mindestens eines von Cloud-Speicherressourcen, Prozessor-Rechenressourcen, Netzwerkbandbreitenressourcen, Ressourcen virtualisierter Netzwerkinfrastruktur, Software-as-a-Service-(SaaS-)Diensten, Platform-as-a-Service-(PaaS-)Diensten, Infrastructure-as-a-Service-(laaS-)Diensten, Streaming-Mediendiensten, Sprachtelefondiensten und einem oder mehreren von Inline-Diensten umfassen, die aus Deep-Packet-Inspection-(DPI-)Diensten, Virus-Scanning-(VS-)Diensten, Intrusion-Detection-and-Prevention-(IDP-)Diensten, Firewall-(FW-)Filterdiensten und Network-Address-Translation-(NAT-)Diensten ausgewählt sind.

4. Verfahren (700) zur Verwaltung eines Cloud-basierten Rechenzentrums (108), das zum Unterstützen einer Mehrzahl von Mandanten (102-1 bis 102-N) ausgelegt ist, die Zugriff auf mindestens eine/n von Ressourcen und Diensten vom Rechenzentrum anfordern, durch ein System, das eine Mehrzahl von Leaf-Servern, eine Mehrzahl von Chain-Servern und eine Mehrzahl von persistenten Speichervorrichtungen umfasst, die mit der Mehrzahl von Chain-Servern assoziiert ist, wobei jede persistente Speichervorrichtung (206-1 bis 206-M) mit einem entsprechenden Chain-Server (202-1 bis 202-M) gekoppelt und zum Speichern von Mandantendatensätzen in einer Blockchain-Replik (216-1 bis 216-M) konfiguriert ist, wobei das Verfahren (700) umfasst:
Registrieren (702) eines oder mehrerer Mandanten (102-1 bis 102-N) durch ein Mandantenrichtliniendurchsetzungsmodul, das auf jedem der Leaf-Server vorgesehen ist, zum Erhalten von Ressourcen und Diensten, die vom Rechenzentrum (108) unterstützt werden, wobei der eine oder die mehreren Mandanten mindestens eine/n der Ressourcen und Dienste vom Rechenzentrum anfordern;
Kontrollieren von Zugriff des einen oder der mehreren Mandanten auf die/den mindestens eine/n der Ressourcen und Dienste durch das Mandantenrichtliniendurchsetzungsmodul bei Authentifizierung und Autorisierung des einen oder der mehreren Mandanten,
Ausführen eines Mandantenrichtlinienentscheidungsmoduls in Verbindung mit einem Smart-Contract-Ausführungsmodul durch jeden der Mehrzahl von Chain-Servern, wobei das Mandantenrichtlinienentscheidungsmodul, das auf einem Chain-Server ausgeführt wird, auf eine Anforderung von einem Leaf-Server für Zugriff im Auftrag eines Mandanten auf die/den mindestens eine/n von Ressourcen und Diensten, die von der Mehrzahl von Leaf-Servern bereitgestellt werden, anspricht;
Implementieren (704) eines oder mehrerer Smart Contracts durch ein Mandantenrichtlinienentscheidungsmodul (212-1 bis 212-M) in Verbindung mit dem Smart-Contract-Ausführungsmodul, das auf den Chain-Servern vorgesehen ist und ausgeführt wird, auf der Mehrzahl von Chain-Servern (202-1 bis 202-M) für jeden der Mandanten (102-1 bis 102-N) in Reaktion auf das Registrieren der Mandanten (102-1 bis 102-N);
Kompilieren (706) des einen oder der mehreren Smart Contracts in Bytecode-Daten;
Organisieren (708) von Mandantendatensätzen in der Blockchain-Replik (216-1 bis 216-M), die mit einem entsprechenden Chain-Server (202-1 bis 202-M) assoziiert ist, und Speichern des Mandantendatensatzes auf der persistenten Speichervorrichtung, wobei jede persistente Speichervorrichtung mit einem entsprechenden Chain-Server gekoppelt ist, wobei die Mandantendatensätze jeweils den kompilierten Bytecode, der aus dem einen oder den mehreren Smart Contracts generiert wird, die bezüglich einer Dienstverwaltungsvereinbarung eines Mandanten erstellt wurden, eine Mehrzahl von Zustandsvariablen, die einen aktuellen Zustand des Kontos des Mandanten beschreiben, und ein oder mehrere Datenfelder enthalten, die zum Unterstützen von Blockchain-Verwaltung und -Navigation innerhalb der Blockchain-Replik (216-1 bis 216-M) ausgelegt sind;
Verbinden der Mehrzahl von Leaf-Servern, der Mehrzahl von Chain-Servern und zumindest einer Teilmenge der Mehrzahl von persistenten Speichervorrichtungen mit einem Kommunikationsnetzwerk zum Durchführen von Kommunikationen dazwischen, und
Aufrechterhalten (712) von Kohärenz zwischen den Blockchain-Repliken (216-1 bis 216-M) durch Ausführen einer Konsensprotokoll-Engine (910) zumindest auf einem Teil der Mehrzahl von Chain-Servern (202-1 bis 202-M).

5. Verfahren (700) nach Anspruch 4, wobei jede Blockchain-Replik (216-1 bis 216-M) in einer persistenten Speichervorrichtung (206-1 bis 206-M) gespeichert wird, die mit dem entsprechenden Chain-Server (202-1 bis 202-M) assoziiert ist, und das Verfahren (700) ferner ein kausales Trennen (712) jeder persistenten Speichervorrichtung von anderen persistenten Speichervorrichtungen bezüglich einer Funktionsstörung auf einer der anderen persistenten Speichervorrichtungen umfasst.

6. Verfahren (700, 400) nach Anspruch 4, wobei das Registrieren eines Mandanten umfasst:
Herstellen einer Verbindung (404) mit einem Mandantenrichtliniendurchsetzungsmodul, das sich auf einem Leaf-Server (204-1 bis 204-K) des Rechenzentrums (108) befindet, über ein Web-Portal, das auf einer Site eines Mandanten ausgeführt wird;
Erhalten (406) eines öffentlichen Schlüssels, der vom Mandanten unter Verwendung eines kryptografischen Prozesses generiert wird, des Namens des Mandanten und eines verschlüsselten Kennworts, das zum Identifizieren eines mit dem Mandanten assoziierten Kontos ausgelegt ist, und von Kreditinformationen, die mindestens eines von der Kreditkartennummer des Mandanten, Bankleitzahlinformationen und Gebührenrichtlinienoptionen umfassen;
Initialisieren (410) eines anfänglichen Kreditbetrags, der mit dem Konto des Mandanten assoziiert ist;
Identifizieren (410) einer/eines oder mehrerer Ressourcen oder Dienste, zu deren Verbrauch der Mandant berechtigt ist;
Auswählen (412) eines oder mehrere Dienstvertragstypen basierend auf den Eingabedaten des Mandanten und der/des einen oder mehreren identifizierten Ressourcen und Dienste für den Mandanten;
Parametrisieren (414) des einen oder der mehreren Dienstvertragstypen und Kommunizieren von parametrisierten Dienstvertragsdaten an das Mandantenrichtlinienentscheidungsmodul (212-1); und
Erstellen (416) eines Dienstverwaltungsvertrags für den Mandanten und Installieren des Dienstverwaltungsvertrags in einer Zuordnungsdatenbank, die zumindest auf einen Teil der Eingabedaten des Mandanten indiziert ist.

7. Verfahren (700, 800) nach Anspruch 4, ferner umfassend:
Generieren bei Empfang einer Dienstanforderung (812), die von einem Leaf-Server im Auftrag eines anfordernden Mandanten weitergeleitet wird, eines Authentifizierungstokens (825) basierend auf einem Erhalten von Konsens zwischen der Mehrzahl von Mandantenrichtlinienentscheidungsmodulen (212-1 bis 212-M; 808-1 bis 808-K) in Reaktion auf ein Ausführen der Konsensprotokoll-Engine (910);
Bereitstellen (826) des Authentifizierungstokens für den anfordernden Mandanten zum Ermöglichen eines sicheren Zugangspfads zum Rechenzentrum (108, 804); und
Aufbauen (832) einer Dienstverbrauchssitzung zwischen dem anfordernden Mandanten und dem Rechenzentrum (108, 804) über den sicheren Zugriffspfad bezüglich des Verbrauchens einer angeforderten Ressource oder eines angeforderten Dienstes.

8. Verfahren (700) nach Anspruch 4, wobei die Dienstanforderung eine Anforderung bezüglich mindestens eines von Cloud-Speicherressourcen, Prozessor-Rechenressourcen, Netzwerkbandbreitenressourcen, Ressourcen einer virtualisierten Netzwerkinfrastruktur, Software-as-a-Service-(SaaS-)Diensten, Platform-as-a-Service-(PaaS-)Diensten, Infrastructure-as-a-Service-(laaS-)Diensten, Streaming-Mediendiensten, Sprachtelefondiensten und einem oder mehreren von Inline-Diensten umfasst, die aus Deep-Packet-Inspection-(DPI-)Diensten, Virus-Scanning-(VS-)Diensten, Intrusion-Detection-and-Prevention-(IDP-)Diensten, Firewall-(FW-)Filterdiensten und Network-Address-Translation-(NAT-)Diensten ausgewählt werden.

9. Nicht-transitorisches maschinenlesbares Speichermedium (908) mit Programmanweisungen darauf, die bei Ausführung durch ein System nach einem der Ansprüche 1 bis 3 zum Durchführen eines Verfahrens nach einem der Ansprüche 4 bis 8 konfiguriert sind.

## Revendications

1. Système (112, 200, 900) pour gérer un centre de données basé sur le cloud (108) fonctionnel pour prendre en charge une pluralité de locataires (102-1 à 102-N) qui demandent un accès à au moins l'un parmi des services et des ressources du centre de données, le système comprenant :
une pluralité de serveurs de feuille (204-1 à 204-K) configurés chacun pour exécuter un module d'application de politique de locataire (210) fonctionnel pour faciliter l'inscription d'un ou plusieurs locataires aux services et ressources pris en charge par le centre de données (108) et pour commander l'accès des un ou plusieurs locataires à au moins l'un parmi les services et ressources lors d'une authentification et d'une autorisation des un ou plusieurs locataires ;
une pluralité de serveurs de chaîne (202-1 à 202-M) configurés chacun pour exécuter un module de décision de politique de locataire (212-1 à 212-M) en association avec un module d'exécution de contrat intelligent (214-1 à 214-M), dans lequel le module de décision de politique de locataire (212-1) s'exécutant sur un serveur de chaîne (201-1) est fonctionnel en réponse à une demande provenant d'un serveur de feuille (204-1 à 204-K) pour un accès pour le compte d'un locataire à l'au moins un parmi des services et des ressources fournis par la pluralité de serveurs de feuille (108) ;
une pluralité de dispositifs de stockage persistant (206-1 à 206-M) associés à la pluralité de serveurs de chaîne (202-1 à 202-M), dans lequel chaque dispositif de stockage persistant (206-1 à 206-M) est couplé à un serveur de chaîne (202-1 à 202-M) correspondant et configuré pour stocker des enregistrements de locataire dans une réplique de chaîne de blocs (216-1 à 216-M), dans lequel chaque enregistrement de locataire (500) est fonctionnel pour contenir un code d'octets compilé généré à partir d'un ou plusieurs contrats intelligents associés à un accord de gestion de service du locataire, une pluralité de variables d'état décrivant un état courant du compte du locataire, et un ou plusieurs champs de données fonctionnels pour prendre en charge une gestion et une navigation de chaîne de blocs à l'intérieur de la réplique de chaîne de blocs (216-1 à 216-M) ; et
un réseau de communication (250) interconnectant la pluralité de serveurs de feuille (204-1 à 204-K), la pluralité de serveurs de chaîne (202-1 à 202-M) et au moins un sous-ensemble de la pluralité de dispositifs de stockage persistant (206-1 à 206-M) pour effectuer des communications entre eux, dans lequel chacun de la pluralité de serveurs de chaîne (202-1 à 202-M) comprend un moteur de protocole de consensus (910) fonctionnel pour maintenir un consensus parmi les répliques de chaîne de blocs (216-1 à 216-M) stockées dans la pluralité de dispositifs de stockage persistant (206-1 à 206-M).

2. Système (112, 200, 900) selon la revendication 1, dans lequel chaque dispositif de stockage persistant (206-1 à 206-M) est déconnecté causalement d'autres dispositifs de stockage persistant en raison d'un dysfonctionnement de l'un quelconque des autres dispositifs de stockage persistant.

3. Système (112, 200, 900) selon la revendication 1, dans lequel les services et ressources pris en charge par le centre de données (108) comprennent au moins l'un parmi des ressources de stockage dans le cloud, des ressources de calcul de processeur, des ressources de bande passante de réseau, des ressources d'infrastructures de réseau virtualisées, des services de logiciel en tant que service (Saas), des services de plate-forme en tant que service (Paas), des services d'infrastructure en tant que service (IaaS), des services de streaming multimédia, des services de téléphonie vocale et un ou plusieurs services intégrés sélectionnés parmi des services d'inspection de paquets en profondeur (DPI), des services de recherche de virus (VS), des services de détection et de prévention d'intrusion (IDP), des services de filtrage de pare-feu (FW) et des services de conversion d'adresse de réseau (NAT).

4. Procédé (700) de gestion d'un centre de données basé sur le cloud (108) fonctionnel pour prendre en charge une pluralité de locataires (102-1 à 102-N) qui demandent un accès à un ou plusieurs services ou ressources du centre de données, par un système comprenant une pluralité de serveurs de feuille, une pluralité de serveurs de chaîne, une pluralité de dispositifs de stockage persistant associés à la pluralité de serveurs de chaîne, dans lequel chaque dispositif de stockage persistant (206-1 à 206-M) est couplé à un serveur de chaîne (202-1 à 202-M) correspondant et configuré pour stocker des enregistrements de locataire dans une réplique de chaîne de blocs (216-1 à 216-M), le procédé (700) comprenant :
l'inscription (702), par un module d'application de politique de locataire prévu sur chacun des serveurs de feuille, d'un ou plusieurs locataires (102-1 à 102-N) pour obtenir des services et ressources pris en charge par le centre de données (108), dans lequel les un ou plusieurs locataires demandent au moins l'un parmi les services et ressources au centre de données ;
la commande, par le module d'application de politique de locataire, de l'accès des un ou plusieurs locataires à l'au moins un parmi les services et ressources lors d'une authentification et d'une autorisation des un ou plusieurs locataires ;
l'exécution, par chacun de la pluralité de serveurs de chaîne, d'un module de décision de politique de locataire en association avec un module d'exécution de contrat intelligent, dans lequel le module de décision de politique de locataire s'exécutant sur un serveur de chaîne répond à une demande provenant d'un serveur de feuille pour un accès pour le compte d'un locataire à l'au moins un parmi des services et des ressources fournis par la pluralité de serveurs de feuille ;
la mise en œuvre (704) d'un ou plusieurs contrats intelligents par un module de décision de politique de locataire (212-1 à 212-M), en association avec le module d'exécution de contrat intelligent prévu sur les serveurs de chaîne s'exécutant, sur la pluralité de serveurs de chaîne (202-1 à 202-M) pour chacun des locataires (102-1 à 102-M) en réponse à l'inscription des locataires (102-1 à 102-M) ;
la compilation (706) des un ou plusieurs contrats intelligents dans des données de code d'octets ;
l'organisation (708) d'enregistrements de locataire dans la réplique de chaîne de blocs (216-1 à 216-M) associée à un serveur de chaîne (202-1 à 202-M) correspondant et le stockage de l'enregistrement de locataire sur le dispositif de stockage persistant, dans lequel chaque dispositif de stockage persistant est couplé à un serveur de chaîne correspondant, chacun des enregistrements de locataire contenant le code d'octets compilé généré à partir des un ou plusieurs contrats intelligents créés en ce qui concerne un accord de gestion de services d'un locataire, une pluralité de variables d'état décrivant un état courant du compte du locataire, et un ou plusieurs champs de données fonctionnels pour prendre en charge une gestion et une navigation de chaîne de blocs à l'intérieur de la réplique de chaîne de blocs (216-1 à 216-M) ;
l'interconnexion de la pluralité de serveurs de feuille, la pluralité de serveurs de chaîne et au moins un sous-ensemble de la pluralité de dispositifs de stockage persistant à un réseau de communication pour effectuer des communications entre eux, et
le maintien (712) d'une cohérence parmi les répliques de chaîne de blocs (216-1 à 216-M) par l'exécution d'un moteur de protocole de consensus (910) sur au moins une partie de la pluralité de serveurs de chaîne (202-1 à 202-M).

5. Procédé (700) selon la revendication 4, dans lequel chaque réplique de chaîne de blocs (216-1 à 216-M) est stockée dans un dispositif de stockage persistant (206-1 à 206-M) associé au serveur de chaîne (202-1 à 202-M) correspondant, et le procédé (700) comprenant en outre la déconnexion causale (712) de chaque dispositif de stockage persistant d'autres dispositifs de stockage persistant en raison d'un dysfonctionnement de l'un quelconque des autres dispositifs de stockage persistant.

6. Procédé (700, 400) selon la revendication 4, dans lequel l'inscription d'un locataire comprend :
la connexion (404) via un portail Web s'exécutant au niveau d'un site d'un locataire à un module d'application de politique de locataire résidant sur un serveur de feuille (204-1 à 204-K) du centre de données (108) ;
l'obtention (406) d'une clé publique générée par le locataire en utilisant un processus de chiffrement, le nom du locataire et un mot de passe chiffré fonctionnel pour identifier un compte associé au locataire, et des informations de crédit comprenant au moins l'un parmi un numéro de carte de crédit, des informations d'acheminement bancaire et des options de politique de facturation du locataire ;
l'initialisation (410) d'un montant de crédit initial associé au compte du locataire ;
l'identification (410) d'un ou plusieurs services ou ressources autorisés pour être consommés par le locataire ;
la sélection (412) d'un ou plusieurs types de contrat de services sur la base de données d'entrée du locataire et des un ou plusieurs services et ressources identifiés pour le locataire ;
le paramétrage (414) des un ou plusieurs types de contrat de service et la communication des données de contrat de service paramétrées au module de décision de politique de locataire (212-1) ; et
la création (416) d'un contrat de gestion de services pour le locataire et l'installation du contrat de gestion de services dans une base de données de mappage indexé à au moins une partie des données d'entrée du locataire.

7. Procédé (700, 800) selon la revendication 4, comprenant en outre :
à la réception d'une demande de service (812) propagée depuis un serveur de feuille pour le compte d'un locataire demandeur, la génération d'un jeton d'authentification (825) sur la base de l'obtention d'un consensus parmi la pluralité de modules de décision de politique de locataire (212-1 à 212-M ; 808-1 à 808-K) en réponse à l'exécution du moteur de protocole de consensus (910) ;
la fourniture (826) du jeton d'authentification au locataire demandeur pour faciliter un chemin d'accès sécurisé au centre de données (108, 804) ; et
l'établissement (832) d'une session de consommation de services entre le locataire demandeur et le centre de données (108, 804) via le chemin d'accès sécurisé en ce qui concerne la consommation d'un service ou ressource demandé.

8. Procédé (700) selon la revendication 4, dans lequel la demande de service comprend une demande relative à au moins l'un parmi des ressources de stockage dans le cloud, des ressources de calcul de processeur, des ressources de bande passante de réseau, des ressources d'infrastructures de réseau virtualisées, des services de logiciel en tant que service (Saas), des services de plate-forme en tant que service (Paas), des services d'infrastructure en tant que service (IaaS), des services de streaming multimédia, des services de téléphonie vocale et un ou plusieurs services intégrés sélectionnés parmi des services d'inspection de paquets en profondeur (DPI), des services de recherche de virus (VS), des services de détection et de prévention d'intrusion (IDP), des services de filtrage de pare-feu (FW) et des services de conversion d'adresse de réseau (NAT) .

9. Support de stockage non transitoire lisible par machine (908) sur lequel sont stockées des instructions de programme qui, lorsqu'elles sont exécutées par un système selon l'une quelconque des revendications 1 à 3, sont configurées pour réaliser un procédé selon l'une quelconque des revendications 4 à 8.
